# EUROPEAN PATENT APPLICATION

(11) **EP 4 836 431 A1**
(43) Date of publication of application: **04.11.2026**
(21) Application number: 25894214.3
(22) Date of filing: 13.11.2025
(51) Int. Cl.: H04N 23/57

(54) **CAMERA ASSEMBLY AND ELECTRONIC DEVICE**

(30) Priority: 25.11.2024 CN 202411707938; 28.02.2025 CN 202520345567 U
(71) Applicant: Huawei Technologies Co., Ltd., Shenzhen, Guangdong 518129 (CN)
(72) Inventor: KANG, Wenshuo, Shenzhen, Guangdong 518129 (CN); HU, Jiahao, Shenzhen, Guangdong 518129 (CN); DU, Fengyang, Shenzhen, Guangdong 518129 (CN)
(74) Representative: Huawei European IPR
(86) International application number: PCT/CN2025/134687
(87) International publication number: WO 2026/108708

(57) **Abstract**

This application provides a camera assembly and an electronic device. The camera assembly includes a first camera module and a first camera bracket, and the first camera module is fastened to the first camera bracket. The first camera bracket includes a first body member and a first conductive member, the first body member includes a body layer and an antioxidation layer, a material of the body layer includes a magnesium alloy, and impedance of the body layer is less than impedance of the antioxidation layer. The body layer includes a first area and a second area, the antioxidation layer is fastened to the first area, the first conductive member is fastened to the second area and is electrically connected to the body layer, the first conductive member is further electrically connected to a ground end of the first camera module, and impedance of the first conductive member is less than the impedance of the antioxidation layer. The ground end of the first camera module can be electrically connected to the first body member. In this case, the antioxidation layer may not need to be broken down. This results in a stable electrical connection between the first conductive member and the ground end of the first camera module, and high stability of the camera assembly.

## Description

This application claims priorities to Chinese Patent Application No. 202411707938.7, filed with the China National Intellectual Property Administration on November 25, 2024 and entitled "MAGNESIUM ALLOY MECHANICAL PART AND ELECTRICAL CONNECTION TECHNOLOGY", and to Chinese Patent Application No. 202520345567.6, filed with the China National Intellectual Property Administration on February 28, 2025 and entitled "CAMERA ASSEMBLY AND ELECTRONIC DEVICE", both of which are incorporated herein by reference in their entireties.

### TECHNICAL FIELD

This application relates to the field of electronic device technologies, and in particular, to a camera assembly and an electronic device.

### BACKGROUND

With development of science and technology and a growing demand of an electronic device market, a camera module has become one of indispensable devices in an electronic device. The camera module may be fastened to a housing of the electronic device through a camera bracket, and is electrically connected to the housing, to implement grounding. The camera bracket may be made of a magnesium alloy. However, because a surface of the magnesium alloy is likely to be oxidized, impedance of the surface increases, affecting an electrical connection between the camera bracket and the housing. In a conventional solution, the camera bracket is surface-treated, to form a film layer of a specific thickness on the surface of the magnesium alloy, so that antioxidation effect can be achieved to some extent. However, due to an excessive thickness of the film layer, the film layer cannot be broken down after power-on. In this case, a stable electrical connection between the camera bracket and the camera module cannot be ensured. Consequently, grounding stability of the camera module is affected.

### SUMMARY

This application provides a camera assembly with high electrical connection stability and an electronic device.

According to a first aspect, this application provides a camera assembly. The camera assembly includes a first camera module and a first camera bracket, and the first camera module is fastened to the first camera bracket. The first camera bracket includes a first body member and a first conductive member, the first body member includes a body layer and an antioxidation layer, a material of the body layer includes a magnesium alloy, and impedance of the body layer is less than impedance of the antioxidation layer. The body layer includes a first area and a second area, the antioxidation layer is fastened to the first area, the first conductive member is fastened to the second area and is electrically connected to the body layer, the first conductive member is further electrically connected to a ground end of the first camera module, and impedance of the first conductive member is less than the impedance of the antioxidation layer.

It may be understood that the magnesium alloy has a low density, high specific strength, and high specific stiffness. Compared with another type of alloy, the magnesium alloy is lighter, stronger, and stiffer, and correspondingly the first camera bracket is also lighter, stronger, and stiffer. This helps implement the lightweight first camera bracket while ensuring reliability of the first camera bracket.

It may be understood that the ground end of the first camera module is electrically connected to the first conductive member, so that the ground end of the first camera module can be electrically connected to the first body member. In this case, the antioxidation layer may not need to be broken down. This results in a small fluctuation range of impedance between the ground end of the first camera module and the first camera bracket and high stability, a stable electrical connection between the first conductive member and the ground end of the first camera module, and high stability of the camera assembly.

In a possible implementation, impedance between the first conductive member and the body layer is less than or equal to 1 Ω.

It may be understood that the impedance between the first conductive member and the body layer is set to be less than or equal to 1 Ω, so that the impedance between the first conductive member and the body layer is small, conductivity of an electrical connection path between the first conductive member and the body layer is good, and an electrical connection between the first conductive member and the body layer is reliable.

In a possible implementation, the impedance of the first conductive member is less than or equal to 1 Ω.

It may be understood that the impedance of the first conductive member is set to be less than or equal to 1 Ω, so that the impedance of the first conductive member is small, conductivity of the first conductive member is good, and an electrical connection between the first conductive member and the first body member or between the first conductive member and another mechanical part is more reliable.

In a possible implementation, impedance between the first conductive member and the first camera module is less than or equal to 5 Ω.

It may be understood that the impedance between the first conductive member and the first camera module is set to be less than or equal to 5 Ω, so that an impedance value of an electrical connection path between the first conductive member and the ground end of the first camera module is small, and an electrical connection between the first conductive member and the ground end of the first camera module is reliable.

In a possible implementation, the body layer includes a protrusion, and the protrusion of the body layer protrudes from the second area.

It may be understood that the protrusion of the body layer is disposed, so that a surface of the body layer has large roughness and a large friction coefficient.

In a possible implementation, the body layer includes a recess area, and the recess area of the body layer is located in the second area.

It may be understood that the recess area of the body layer is disposed, so that the surface of the body layer has large roughness and a large friction coefficient.

In a possible implementation, the first conductive member is a spring plate, a plating layer, a laser engraving layer, or a coating.

It may be understood that the first conductive member is easily electrically connected to the first body member.

In a possible implementation, the first conductive member is a spring plate, and the first conductive member is fastened to the first body member through welding.

It may be understood that, in a process of welding the first conductive member to the first body member, a welding joint may break down the antioxidation layer in the second area, so that the first conductive member and the first body member fuse together at the welding joint, and there is no hole or gap between the first conductive member and the first body member. In other words, there may be no antioxidation layer between the first conductive member and the first body member. The antioxidation layer may not cover the second area, the first conductive member and the first body member may form a stable closed joint structure, and the body layer in the second area is not likely to be oxidized due to contact with air. In addition, the first conductive member may be in direct contact with the antioxidation layer, and the first conductive member and the antioxidation layer may jointly cover the body layer. In this way, the body layer is not likely to be exposed to air, and therefore the body layer is not easily to be oxidized, thereby avoiding an increase in the impedance of the body layer.

In a possible implementation, the first conductive member is a spring plate; and a positioning pillar protrudes from one of the first body member and the first conductive member, and a positioning hole is provided on the other one of the first body member and the first conductive member, where at least a part of the positioning pillar is located in the positioning hole.

It may be understood that, because the positioning pillar and the positioning hole fit each other, the first conductive member is not likely to slide relative to the first body member, and a connection between the first conductive member and the first body member is reliable.

In a possible implementation, the first conductive member includes a first part and a second part, the second part is bent and connected to the first part, the first part is fastened to the first body member and is electrically connected to the first body member, and the second part is electrically connected to the ground end of the first camera module.

It may be understood that the ground end of the first camera module can be electrically connected to the first body member through the second part of the first conductive member and the first part of the first conductive member, and the first part is bent relative to the second part. This helps implement an electrical connection between the first conductive member and the ground end of the first camera module. In addition, in an assembly process, physical interference may be not likely to occur between the first conductive member and the first body member and between the first conductive member and the ground end of the first camera module, the first body member, the first conductive member, and the ground end of the first camera module are not likely to be damaged due to collision, and reliability between the first body member, the first conductive member, and the ground end of the first camera module is high.

In a possible implementation, the first conductive member includes a first conductive member body, a first plating layer, and a second plating layer, the first plating layer is fastened to the first conductive member body, and the second plating layer is fastened to a side that is of the first plating layer and that is away from the first conductive member body; and reducibility of the first plating layer is greater than reducibility of the second plating layer.

It may be understood that the reducibility of the first plating layer is set to be greater than the reducibility of the second plating layer, so that activity of the second plating layer may be weaker than activity of the first plating layer, and the second plating layer can stabilize the first plating layer and prevent the first plating layer from falling off.

In a possible implementation, the first conductive member includes a protrusion, and the protrusion of the first conductive member protrudes from the first conductive member body on the second part.

It may be understood that the protrusion of the first conductive member is disposed, so that a surface of the first conductive member has large roughness and a large friction coefficient.

In a possible implementation, the first conductive member includes a recess area, and the recess area of the first conductive member is located on the first conductive member body on the second part.

It may be understood that the recess area of the first conductive member is disposed, so that the surface of the first conductive member has large roughness and a large friction coefficient.

In a possible implementation, the first conductive member is a plating layer; and the first conductive member includes a first plating layer, the first plating layer is fastened to the first body member, and impedance of the first plating layer is less than the impedance of the antioxidation layer.

It may be understood that the impedance of the first plating layer is set to be less than the impedance of the antioxidation layer, so that conductivity of the first plating layer is better than conductivity of the antioxidation layer, and an electrical connection between the first conductive member and the ground end of the first camera module is more reliable.

In a possible implementation, the first conductive member further includes a second plating layer, the second plating layer is fastened to a side that is of the first plating layer and that is away from the first body member, and reducibility of the first plating layer is greater than reducibility of the second plating layer.

It may be understood that the reducibility of the first plating layer is set to be greater than the reducibility of the second plating layer, so that activity of the second plating layer may be weaker than activity of the first plating layer, and the second plating layer can stabilize the first plating layer and prevent the first plating layer from falling off.

In a possible implementation, a material of the first plating layer includes nickel, chromium, or zinc.

It may be understood that the first plating layer has small resistance, and the first plating layer has good conductivity. This can ensure a reliable electrical connection between the first plating layer and another mechanical part. In addition, the first plating layer is more easily fastened to the first body member.

In a possible implementation, a material of the second plating layer includes gold.

It may be understood that the second plating layer can keep the first plating layer stable, so that the first plating layer is not likely to fall off, and electrical conduction between the first plating layer and another mechanical part is ensured.

In a possible implementation, the first conductive member is a laser engraving layer, and a surface density P of the first conductive member satisfies: P≥95%.

It may be understood that the surface density P of the first conductive member is set to be greater than or equal to 95%, so that a density degree of a surface of the first conductive member is high, the surface of the first conductive member is not likely to be oxidized, impedance of the first conductive member is not likely to be increased, and an electrical connection between the first conductive member and another mechanical part is reliable.

In a possible implementation, the first conductive member is a coating; and the second area protrudes from the first area in a direction close to the ground end of the first camera module, and the second area is disposed opposite to the ground end of the first camera module.

It may be understood that, because the second area protrudes relative to the first area, the first conductive member is more easily formed in the second area in this implementation.

In a possible implementation, the camera assembly further includes a first silver adhesive, the first silver adhesive is fastened to the first conductive member and the ground end of the first camera module, and the first conductive member is electrically connected to the ground end of the first camera module through the first silver adhesive.

It may be understood that the first silver adhesive has good adhesion and conductivity, so that a fixed connection and an electrical connection between the first conductive member and the ground end of the first camera module can be implemented. In addition, the first silver adhesive has specific fluidity before curing, so that the first silver adhesive can adapt to space between the first conductive member and the ground end of the first camera module, and reliability of a fixed connection and an electrical connection between the first conductive member and the ground end of the first camera module can be ensured.

In a possible implementation, the body layer further includes a third area, and the third area and the second area are spaced apart; and the first camera bracket further includes an electrical connection member, impedance of the electrical connection member is less than the impedance of the antioxidation layer, the electrical connection member is fastened to the third area, and the electrical connection member is electrically connected to the body layer.

It may be understood that the electrical connection member and the first conductive member may be electrically connected through the first body member, and the first conductive member may be electrically connected to another mechanical part through the first body member and the electrical connection member.

According to a second aspect, this application provides an electronic device. The electronic device includes a housing and the camera assembly. The camera assembly is fastened to the housing, and the first camera bracket is electrically connected to the housing, to implement grounding of the ground end of the first camera module.

It may be understood that grounding of the first camera module of the electronic device is stable.

In a possible implementation, the body layer further includes a third area, and the third area and the second area are spaced apart; and the first camera bracket further includes an electrical connection member, impedance of the electrical connection member is less than the impedance of the antioxidation layer, the electrical connection member is fastened to the third area, and the electrical connection member is electrically connected to the body layer.

It may be understood that the ground end of the first camera module may be electrically connected to the housing through the first conductive member, the first body member, and the electrical connection member, to implement grounding of the first camera module.

It may be understood that the first camera bracket can implement an electrical connection between the ground end of the first camera module and the housing, to implement grounding of the first camera module. In other words, the first camera bracket can mount the first camera module, and can also implement grounding of the first camera module.

In a possible implementation, the electronic device further includes a dome, the dome is fastened between the electrical connection member and the housing, and the dome is further electrically connected to the electrical connection member and the housing.

It may be understood that the dome can implement an electrical connection between the electrical connection member and the housing. In this way, the dome can implement grounding of the first camera module.

### BRIEF DESCRIPTION OF DRAWINGS

FIG. 1 is a diagram of a structure of an electronic device according to an implementation of this application;
FIG. 2 is a schematic partial cross-sectional view of the electronic device shown in FIG. 1 at an A-A line according to an implementation;
FIG. 3 is a diagram of a partial structure of the electronic device shown in FIG. 2 according to an implementation;
FIG. 4 is a schematic exploded view of a partial structure of a camera assembly shown in FIG. 3 according to an implementation;
FIG. 5 is a schematic partial exploded view of a first camera bracket shown in FIG. 4 according to an implementation;
FIG. 6 is a diagram of a partial structure of a first body member shown in FIG. 5 according to an implementation;
FIG. 7A is a schematic partial cross-sectional view of a first body member shown in FIG. 5 at a B-B line according to an implementation;
FIG. 7B is a schematic partial cross-sectional view of a first body member shown in FIG. 5 at a C-C line according to an implementation;
FIG. 8A is a schematic partial cross-sectional view of a first conductive member shown in FIG. 5 at a D-D line according to an implementation;
FIG. 8B is a schematic partial enlarged view of the first conductive member shown in FIG. 8A at a position M according to an implementation;
FIG. 9 is a schematic partial cross-sectional view of a first camera bracket shown in FIG. 3 at an E-E line according to an implementation;
FIG. 10 is a schematic partial cross-sectional view of the electronic device shown in FIG. 3 at an E-E line according to an implementation;
FIG. 11 is a diagram of a partial structure of the first body member shown in FIG. 6 from another angle;
FIG. 12 is a schematic partial cross-sectional view of the electronic device shown in FIG. 3 at an E-E line according to another implementation;
FIG. 13A is a surface appearance diagram 1 of a first conductive member shown in FIG. 5 according to another implementation;
FIG. 13B is a surface appearance diagram 2 of a first conductive member shown in FIG. 5 according to another implementation;
FIG. 13C is a surface appearance diagram 3 of a first conductive member shown in FIG. 5 according to another implementation;
FIG. 14 is a schematic partial cross-sectional view of the electronic device shown in FIG. 3 at an E-E line according to still another implementation;
FIG. 15 is a diagram of a partial structure of the electronic device shown in FIG. 1 according to another implementation;
FIG. 16 is a diagram of a partial structure of the electronic device shown in FIG. 1 according to still another implementation; and
FIG. 17 is a schematic partial cross-sectional view of the electronic device shown in FIG. 16 at an F-F line according to an implementation.

### DESCRIPTION OF EMBODIMENTS

The following clearly and completely describes the technical solutions in implementations of this application with reference to the accompanying drawings in implementations of this application.

In the descriptions of this application, it should be noted that, unless otherwise specified and limited, the terms "mount", "connected", "connection", and "connect" should be understood in a broad sense. For example, "connection" may be a detachable connection or a nondetachable connection, or may be a direct connection or an indirect connection through an intermediate medium, or may be an electrical connection or a mechanical connection. "Fastened" means that two parts are connected to each other and a relative position relationship remains unchanged after the two parts are connected to each other. In addition, obtaining an integrated structure of two components by using an integrated molding technique means that, in a process of forming one of the two components, the component is connected to the other component, and the two components do not need to be connected to each other through reprocessing (for example, bonding, welding, clamping, or screwing). That a component A and a component B are disposed opposite to each other may be as follows: The component A is projected in a target direction to obtain a projection C, the component B is projected in the target direction to obtain a projection D, and the projection C and the projection D may at least largely overlap. In some implementations, largely overlapping may be any one of the following cases: The projection C is completely located in the projection D; the projection D is completely located in the projection C; or the projection C and the projection D cross each other, and a proportion of a cross area of the projection C and the projection D to the projection C or the projection D is greater than 50%.

Orientation terms mentioned in embodiments of this application, for example, "inside" and "outside", are merely directions with reference to the accompanying drawings. Therefore, the orientation terms are used to better and more clearly describe and understand implementations of this application, instead of indicating or implying that a specified apparatus or element should have a specific orientation, and be constructed and operated in the specific orientation. Therefore, this cannot be understood as a limitation on implementations of this application. A person of ordinary skill in the art may understand specific meanings of the foregoing terms based on specific cases.

In this specification and the claims of this application, the terms "first", "second", and the like are intended to distinguish between similar objects but do not indicate a specific order or sequence. It should be understood that the data termed in such a way is interchangeable in proper circumstances, so that implementations of this application can be implemented in an order other than the orders illustrated or described herein. In addition, objects distinguished by "first", "second", and the like are usually of one type, and a quantity of objects is not limited. For example, there may be one or more first objects. In addition, in this specification and the claims, "and/or" indicates at least one of connected objects, and the character "/" usually indicates an "or" relationship between associated objects. "A plurality of" means at least two.

In addition, in embodiments of this application, a limitation on a relative position relationship is mentioned, for example, being parallel. These limitations are all relative to a current technique level, and are not absolutely strict. A minor deviation is allowed, for example, being substantially parallel is acceptable. For example, that A is parallel to B means that A is parallel or substantially parallel to B, and an included angle of 0 degrees to 10 degrees between A and B is allowed.

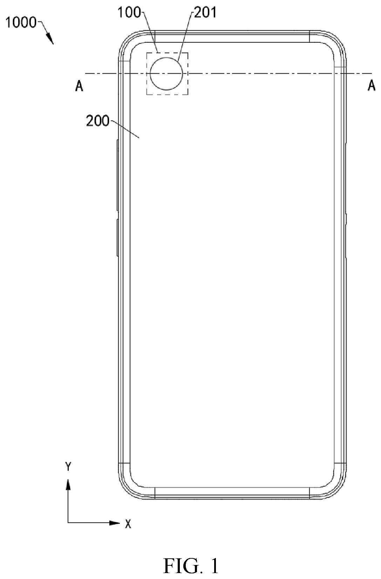

FIG. 1 is a diagram of a structure of an electronic device 1000 according to an implementation of this application.

As shown in FIG. 1, the electronic device 1000 may be a device with a camera assembly, for example, a mobile phone, a tablet computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment shown in FIG. 1, an example in which the electronic device 1000 is a mobile phone is used for description.

It may be understood that, for ease of description, in the following, a width direction of the electronic device 1000 is defined as an X-axis, a height direction of the electronic device 1000 is defined as a Y-axis, and a thickness direction of the electronic device 1000 is defined as a Z-axis. In another implementation, the X-axis direction, the Y-axis direction, and the Z-axis direction may alternatively be flexibly set according to an actual requirement, provided that the X-axis direction, the Y-axis direction, and the Z-axis direction are different from each other.

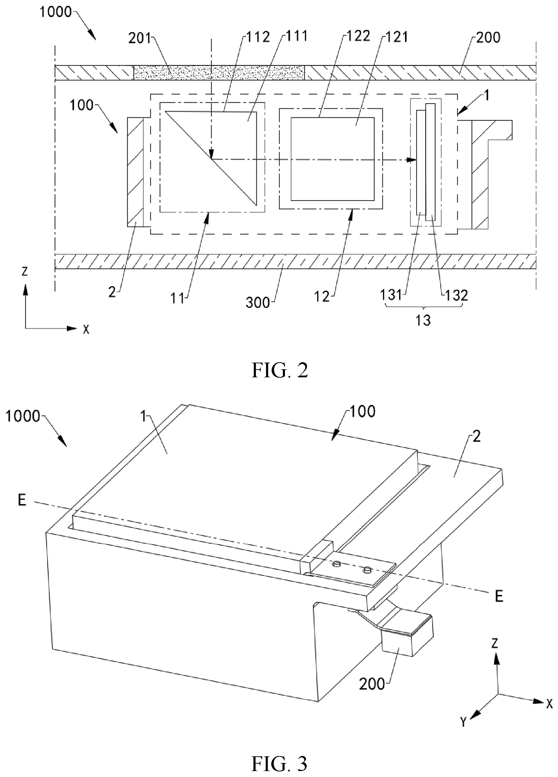

FIG. 2 is a schematic partial cross-sectional view of the electronic device 1000 shown in FIG. 1 at an A-A line according to an implementation.

As shown in FIG. 1 and FIG. 2, in some implementations, the electronic device 1000 may include a camera assembly 100, a housing 200, and a screen 300. The camera assembly 100 may be a rear-facing camera assembly, or may be a front-facing camera assembly. It should be understood that FIG. 1, FIG. 2, and the following related accompanying drawings merely show some components included in the electronic device 1000 as an example. Actual shapes, actual sizes, actual positions, and actual structures of these components are not limited by FIG. 1, FIG. 2, and the following accompanying drawings. In addition, the electronic device 1000 may include more or fewer structures. For example, when the electronic device 1000 includes more structures, the electronic device 1000 may further include a speaker (not shown in the figure) and the like. When the electronic device 1000 includes fewer structures, the electronic device 1000 may alternatively not include the screen 300.

As shown in FIG. 1 and FIG. 2, in some embodiments, the screen 300 is mounted on the housing 200, and encloses the inside of the electronic device 1000 together with the housing 200. The inside of the electronic device 1000 may be used for placing a device, for example, a battery, a receiver, or a microphone, of the electronic device 1000. The screen 300 may be a flat screen or a curved screen.

For example, the housing 200 may include a middle frame and a rear cover. The screen 300 may be fastened to a side of the middle frame. The rear cover may be fastened to a side that is of the middle frame and that is away from the screen 300.

It may be understood that, although this implementation describes structures of the middle frame and the rear cover in an implementation, this does not preclude the middle frame and the rear cover alternatively being disposed in another manner, for example, the middle frame and the rear cover may be of an integrated structure. This is not specifically limited in this application.

For example, the camera assembly 100 may be disposed in the housing 200. The housing 200 has a light-transmitting portion 201. A shape of the light-transmitting portion 201 is not limited to a circular shape shown in FIG. 1, and may alternatively be an elliptic shape or an irregular shape. Light outside the electronic device 1000 may enter the inside of the electronic device 1000 through the light-transmitting portion 201. The camera assembly 100 may collect light that enters the inside of the electronic device 1000. The light-transmitting portion 201 may be a light-transmitting hole, or may be a transparent part in the housing 200. A specific structure of the light-transmitting portion 201 is not specifically limited in this application.

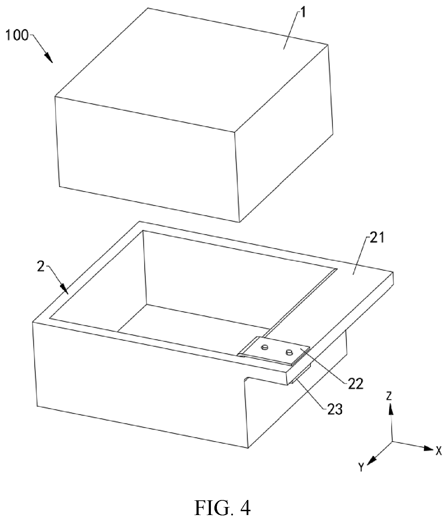

FIG. 3 is a diagram of a partial structure of the electronic device 1000 shown in FIG. 2 according to an implementation. FIG. 4 is a schematic exploded view of a partial structure of the camera assembly 100 shown in FIG. 3 according to an implementation.

As shown in FIG. 2 to FIG. 4, for example, the camera assembly 100 includes a first camera module 1 and a first camera bracket 2. It may be understood that FIG. 2, FIG. 3, and the following related accompanying drawings merely show some components included in the camera assembly 100 as an example. Actual shapes, actual sizes, actual positions, and actual structures of these components are not limited by FIG. 2, FIG. 3, and the following accompanying drawings. In addition, the camera assembly 100 may further include more or fewer structures. For example, when the camera assembly 100 includes more structures, the camera assembly 100 may further include a second camera module 4 (not shown in FIG. 2 and FIG. 3).

As shown in FIG. 2, for example, the first camera module 1 may include a prism module 11, a lens module 12, and an image sensor module 13 that are sequentially arranged from an object side to an image side. It may be understood that FIG. 2 and the following related accompanying drawings merely show some components included in the first camera module 1 as an example. Actual shapes, actual sizes, actual positions, and actual structures of these components are not limited by FIG. 2 and the following accompanying drawings.

For example, the prism module 11 may include a prism 111 and a prism motor 112. The prism motor 112 may be a prism voice coil motor (Prism Voice Coil Motor, PVCM). The prism 111 may be fastened to the prism motor 112. The prism motor 112 may drive the prism 111 to move to implement optical image stabilization of the first camera module 1.

In another implementation, the prism motor 112 may alternatively use a motor in another form (for example, an SMA motor). This is not specifically limited in this application.

For example, the lens module 12 may include a lens 121 and a lens motor 122. The lens motor 122 may be a lens voice coil motor (Lens Voice Coil Motor, LVCM). The lens 121 may be fastened to the lens motor 122. The lens motor 122 may drive the lens 121 to move to implement focusing or zooming of the first camera module 1.

In another implementation, the lens motor 122 may alternatively use a motor in another form (for example, an SMA motor). This is not specifically limited in this application.

As shown in FIG. 2, for example, the image sensor module 13 may include an image sensor 131 and a circuit board 132.

For example, the image sensor 131 is a semiconductor chip, and may also be referred to as a photosensitive chip. The image sensor 131 includes hundreds of thousands to millions of photodiodes on a surface, and generates electric charges when being irradiated by light. The image sensor 131 converts, by using an optical-to-electrical conversion function of an optoelectronic device, an optical image on a photosensitive surface of the image sensor 131 into an electrical signal in a corresponding proportion relationship with the optical image. The photosensitive surface of the image sensor 131 may be disposed facing the first camera module 1. The image sensor 131 may be a charge-coupled device, a complementary metal-oxide-semiconductor, a phototransistor, a thin film transistor, or the like. In another implementation, the image sensor 131 may alternatively be a component of another structure.

For example, the image sensor module 13 may be located on an image side of the lens module 12. In an implementation, the image sensor 131 may be electrically connected to the circuit board 132. Light may sequentially pass through the prism module 11 and the lens module 12 and then arrive at the image sensor 131, to implement imaging.

For example, the prism module 11 and the lens module 12 may be fastened through adhesive bonding or the like. The prism module 11 and the lens module 12 may be electrically connected to the circuit board 132.

As shown in FIG. 2 and FIG. 3, for example, the first camera module 1 may be fastened to the first camera bracket 2. The first camera bracket 2 may be fastened to the housing 200. The first camera bracket 2 may be configured to fasten the first camera module 1 to the housing 200. In another implementation, the first camera module 1 may alternatively be directly fastened to the housing 200.

In an implementation, the first camera bracket 2 may be fastened to the middle frame of the housing 200. The first camera bracket 2 may be configured to fasten the first camera module 1 to the middle frame of the housing 200.

As shown in FIG. 2 and FIG. 3, for example, a ground end of the first camera module 1 may be electrically connected to the first camera bracket 2. The first camera bracket 2 may be electrically connected to the housing 200. In this way, the ground end of the first camera module 1 may be electrically connected to the housing 200 through the first camera bracket 2, to implement grounding.

In an implementation, the first camera bracket 2 may be electrically connected to the middle frame of the housing 200. In this way, the ground end of the first camera module 1 may be electrically connected to the middle frame of the housing 200 through the first camera bracket 2, to implement grounding.

For example, the ground end of the first camera module 1 may be a casing (not shown in the figure) of the first camera module 1. In an implementation, a ground end of the prism motor 112 may be electrically connected to the casing of the first camera module 1. In this way, the ground end of the prism motor 112 is electrically connected to the housing 200 through the ground end of the first camera module 1 and the first camera bracket 2, to implement grounding of the prism motor 112. In addition, a ground end of the lens motor 122 may be electrically connected to the casing of the first camera module 1. In this way, the ground end of the lens motor 122 is electrically connected to the housing 200 through the ground end of the first camera module 1 and the first camera bracket 2, to implement grounding of the lens motor 122. In addition, a ground end of the circuit board 132 may be electrically connected to the casing of the first camera module 1. In this way, the ground end of the circuit board 132 may be electrically connected to the housing 200 through the ground end of the first camera module 1 and the first camera bracket 2, to implement grounding of the circuit board 132.

In another implementation, the ground end of the first camera module 1 may be the ground end of the prism module 11, the ground end of the lens module 12, or the ground end of the circuit board 132.

The camera assembly 100 is specifically described above with reference to the related accompanying drawings. Several structures of the first camera bracket 2 and connection relationships between the first camera bracket 2 and other mechanical parts are specifically described below with reference to the related accompanying drawings.

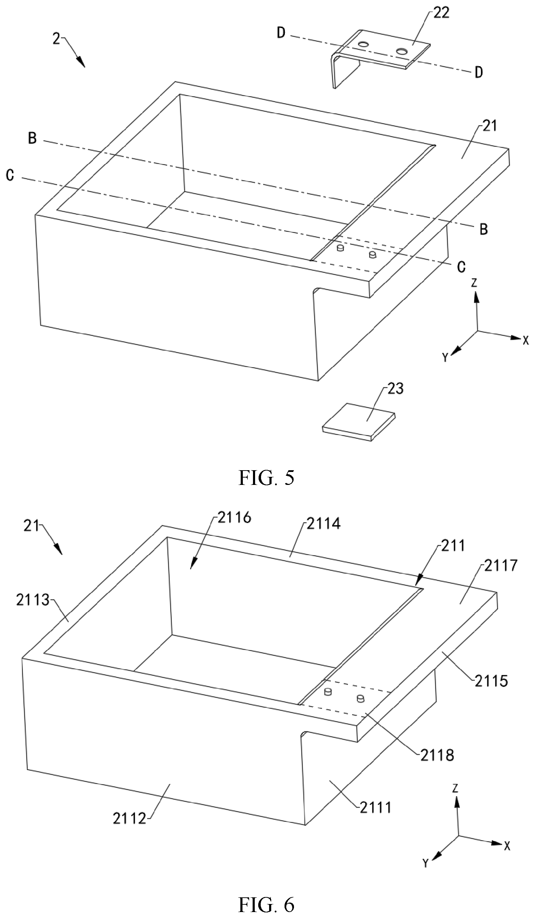

First implementation: Refer to FIG. 4 and FIG. 5. FIG. 5 is a schematic partial exploded view of the first camera bracket 2 shown in FIG. 4 according to an implementation.

For example, the first camera bracket 2 includes a first body member 21, a first conductive member 22, and an electrical connection member 23. It may be understood that FIG. 5 and the following related accompanying drawings merely show some components included in the first camera bracket 2 as an example. Actual shapes, actual sizes, actual positions, and actual structures of these components are not limited by FIG. 5 and the following accompanying drawings. In addition, the first camera bracket 2 may include more or fewer structures. For example, when the first camera bracket 2 includes fewer structures, the first camera bracket 2 may alternatively not include the electrical connection member 23.

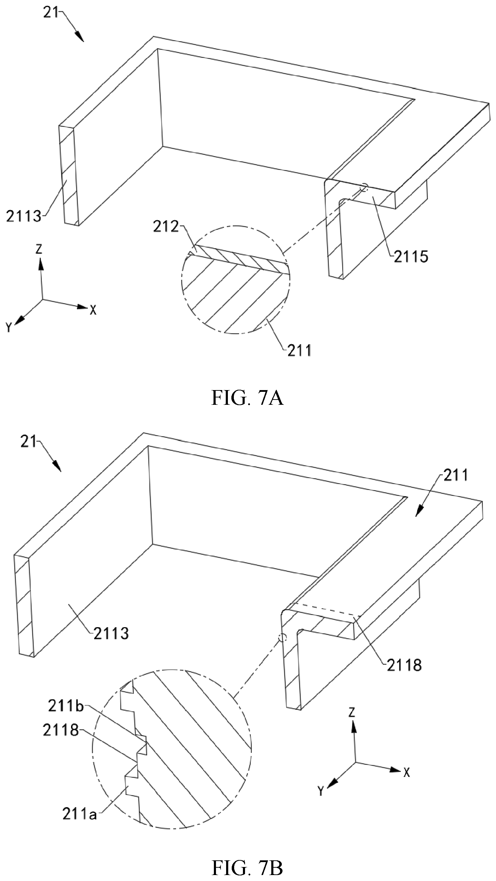

FIG. 6 is a diagram of a partial structure of the first body member 21 shown in FIG. 5 according to an implementation. FIG. 7A is a schematic partial cross-sectional view of the first body member 21 shown in FIG. 5 at a B-B line according to an implementation.

As shown in FIG. 6 and FIG. 7A, for example, the first body member 21 may include a body layer 211 and an antioxidation layer 212. Impedance of the body layer 211 may be less than impedance of the antioxidation layer 212.

For example, a material of the body layer 211 may include a magnesium alloy.

It may be understood that the magnesium alloy has a low density, high specific strength, and high specific stiffness. Compared with another type of alloy, the magnesium alloy is lighter, stronger, and stiffer, and correspondingly the first camera bracket 2 is also lighter, stronger, and stiffer. This helps implement the lightweight first camera bracket 2 (refer to FIG. 3) and the electronic device 1000 (refer to FIG. 3) while ensuring reliability of the first camera bracket 2.

In another implementation, a material of the body layer 211 may alternatively include another material. This is not specifically limited in this application.

As shown in FIG. 6, for example, the body layer 211 may include a first side portion 2111, a second side portion 2112, a third side portion 2113, a fourth side portion 2114, and an extension portion 2115. It may be understood that, although the body layer 211 is described in five parts in this implementation, this does not preclude the body layer 211 being an integrated structure, that is, the first side portion 2111, the second side portion 2112, the third side portion 2113, the fourth side portion 2114, and the extension portion 2115 may be integrally formed. In another implementation, the body layer 211 may alternatively be formed by different independent mechanical parts by using an assembly technique. The extension portion 2115 of the body layer may be an independent mechanical part, and is fastened to the first side portion 2111, the second side portion 2112, the third side portion 2113, and the fourth side portion 2114 through adhesive bonding, welding, or the like.

For example, the first side portion 2111 and the third side portion 2113 may be disposed opposite to each other and spaced apart. The second side portion 2112 and the fourth side portion 2114 may be disposed opposite to each other and spaced apart. The second side portion 2112 and the fourth side portion 2114 may be connected between the first side portion 2111 and the third side portion 2113. The extension portion 2115 may be fastened to the first side portion 2111, and extend in a direction away from the third side portion 2113.

For example, the first side portion 2111, the second side portion 2112, the third side portion 2113, and the fourth side portion 2114 may enclose mounting space 2116.

In another implementation, a shape of the body layer 211 is not specifically limited.

For example, a material of the antioxidation layer 212 may include phosphate.

It may be understood that the antioxidation layer 212 can prevent the body layer 211 from being oxidized due to contact with air, thereby avoiding an increase in the impedance of the body layer 211, and avoiding a decrease in reliability of an electrical connection between the first body member 21 and another component.

In another implementation, the material of the antioxidation layer 212 may further include other salt. This is not specifically limited in this application.

As shown in FIG. 6, for example, the body layer 211 may include a first area 2117 and a second area 2118. It may be understood that, in FIG. 6, the first area 2117 and the second area 2118 are schematically distinguished by using dashed lines. Shapes and sizes of the first area 2117 and the second area 2118 are not specifically limited in this application. In another implementation, the shapes and the sizes of the first area 2117 and the second area 2118 may be flexibly set according to an actual requirement. This is not specifically limited in this application.

FIG. 7B is a schematic partial cross-sectional view of the first body member 21 shown in FIG. 5 at a C-C line according to an implementation.

As shown in FIG. 7B, for example, the body layer 211 may include a protrusion 211a and a recess area 211b. It may be understood that FIG. 7B merely shows sizes, shapes, positions, quantities, and the like of protrusions 211a and recess areas 211b of the body layer 211 as an example. In another implementation, the sizes, the shapes, the positions, the quantities, and the like of the protrusions 211a and the recess areas 211b of the body layer 211 may be flexibly set according to an actual requirement. This is not specifically limited in this application.

For example, the protrusion 211a of the body layer 211 may protrude from the second area 2118. In an implementation, the protrusion 211a of the body layer 211 may protrude in a direction close to the third side portion 2113.

For example, the recess area 211b of the body layer 211 may be located in the second area 2118. In an implementation, the recess area 211b of the body layer 211 may be recessed in the direction away from the third side portion 2113.

It may be understood that the protrusion 211a and the recess area 211b of the body layer 211 are disposed, so that a surface of the body layer 211 has large roughness and a large friction coefficient.

As shown in FIG. 6 and FIG. 7A, the antioxidation layer 212 may be fastened to the first area 2117 of the body layer 211. The antioxidation layer 212 may cover the first side portion 2111, the second side portion 2112, the third side portion 2113, the fourth side portion 2114, and the extension portion 2115 of the body layer 211.

It may be understood that the antioxidation layer 212 may cover the first area 2117 of the body layer 211 to prevent the first area 2117 of the body layer 211 from being oxidized, thereby avoiding an increase in the impedance of the body layer 211, and avoiding a decrease in reliability of an electrical connection between the first body member 21 and another component.

For example, the antioxidation layer 212 may be formed in the first area 2117 of the body layer 211 by using a surface treatment technique. The surface treatment technique means immersing the body layer 211 in liquid and forming an antioxidation conversion film in the first area 2117 of the body layer 211 through a chemical reaction. In this implementation, the antioxidation layer 212 may be a layer of conversion film mainly composed of phosphorus salt and generated through an oxidation-reduction reaction of phosphoric acid and salt of the phosphoric acid with the first area 2117 of the body layer 211.

In another implementation, the antioxidation layer 212 may alternatively be a layer of conversion film mainly composed of other salt (for example, chromium salt) and generated through an oxidation-reduction reaction of other acid (for example, chromic acid) and salt of the other acid with the first area 2117 of the body layer 211. This is not specifically limited in this application.

In another implementation, the antioxidation layer 212 may alternatively be formed in the first area 2117 of the body layer 211 by using another technique. This is not specifically limited in this application.

For example, the first conductive member 22 may be a spring plate. The spring plate may be an elastic part, and is usually made of a metal, plastic, or another elastic material.

In another implementation, the first conductive member 22 may alternatively be a mechanical part in another form. This is not specifically limited in this application.

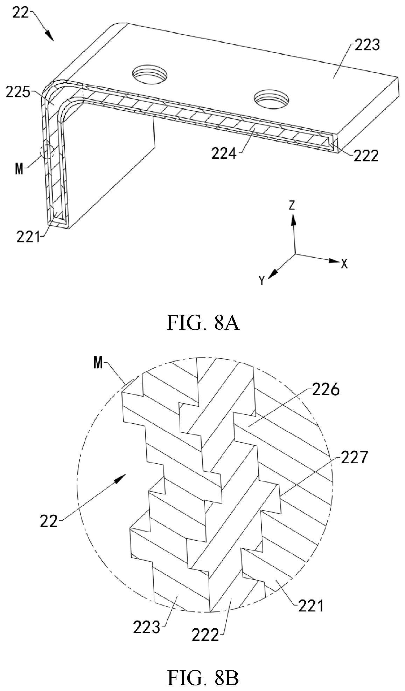

FIG. 8A is a schematic partial cross-sectional view of the first conductive member 22 shown in FIG. 5 at a D-D line according to an implementation.

As shown in FIG. 8A, for example, the first conductive member 22 may include a first conductive member body 221, a first plating layer 222, and a second plating layer 223. It may be understood that FIG. 8A and the following related accompanying drawings merely show some components included in the first conductive member 22 as an example. Actual shapes, actual sizes, actual positions, and actual structures of these components are not limited by FIG. 8A and the following accompanying drawings. In addition, the first conductive member 22 may include more or fewer structures. For example, when the first conductive member 22 includes fewer structures, the first conductive member 22 may alternatively not include the first plating layer 222 and/or the second plating layer 223.

For example, a material of the first conductive member body 221 may include a copper-titanium alloy.

It may be understood that the copper titanium alloy has small resistance, the first conductive member 22 has small impedance, the first conductive member 22 has good conductivity, and an electrical connection between the first conductive member 22 and another mechanical part is reliable.

In another implementation, a material of the first conductive member 22 may alternatively include another material. This is not specifically limited in this application.

For example, reducibility of the first plating layer 222 may be greater than reducibility of the second plating layer 223. A material of the first plating layer 222 may include nickel, chromium, zinc, or the like. A material of the second plating layer 223 may include gold and the like.

It may be understood that the reducibility of the first plating layer 222 is set to be greater than the reducibility of the second plating layer 223, so that activity of the second plating layer 223 may be weaker than activity of the first plating layer 222, and the second plating layer 223 can stabilize the first plating layer 222 and prevent the first plating layer 222 from falling off.

For example, the first plating layer 222 may be fastened to the first conductive member body 221. The first plating layer 222 may cover the first conductive member body 221. The second plating layer 223 may be fastened to a side that is of the first plating layer 222 and that is away from the first conductive member body 221. The second plating layer 223 may cover the first plating layer 222.

In another implementation, the first plating layer 222 and the second plating layer 223 may alternatively be disposed in another manner. For example, the first plating layer 222 may cover the first conductive member body 221. The second plating layer 223 may cover a part of the first plating layer 222. This is not specifically limited in this application.

As shown in FIG. 8A, for example, the first conductive member 22 may include a first part 224 and a second part 225. The second part 225 may be bent and connected to the first part 224, and is electrically connected to the first part 224. In this case, the first conductive member 22 may be in a bent shape. It may be understood that, in FIG. 8A, the first part 224 and the second part 225 are merely schematically distinguished by using dashed lines. In another implementation, the first part 224 and the second part 225 may alternatively be disposed in another manner, and may be flexibly disposed according to an actual requirement. This is not specifically limited in this application.

FIG. 8B is a schematic partial enlarged view of the first conductive member 22 shown in FIG. 8A at a position M according to an implementation.

As shown in FIG. 8A and FIG. 8B, the first conductive member 22 may include a protrusion 226 and a recess area 227. It may be understood that FIG. 8B merely shows sizes, shapes, positions, quantities, and the like of protrusions 226 and recess areas 227 of the first conductive member 22 as an example. In another implementation, the sizes, the shapes, the positions, the quantities, and the like of the protrusions 226 and the recess areas 227 of the first conductive member 22 may be flexibly set according to an actual requirement. This is not specifically limited in this application.

For example, the protrusion 226 of the first conductive member 22 may protrude from the first conductive member body 221 on the second part 225, and protrude in a direction away from the first conductive member body 221 on the first part 224. The first plating layer 222 and the second plating layer 223 may cover the protrusions 226 of the first conductive member 22.

For example, the recess area 227 of the first conductive member 22 may be located on the first conductive member body 221 on the second part 225, and is recessed in a direction close to the first conductive member body 221 on the first part 224. The first plating layer 222 and the second plating layer 223 may cover the recess area 227 of the first conductive member 22.

It may be understood that the protrusion 226 and the recess area 227 of the first conductive member 22 are disposed, so that a surface of the first conductive member 22 has large roughness and a large friction coefficient.

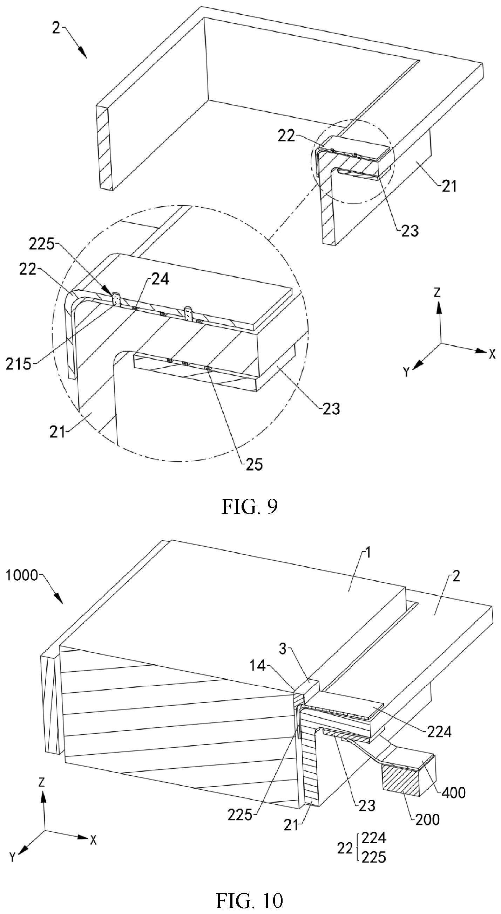

FIG. 9 is a schematic partial cross-sectional view of the first camera bracket 2 shown in FIG. 3 at an E-E line according to an implementation.

Refer to FIG. 9. With reference to FIG. 6, for example, the first conductive member 22 may be fastened to the second area 2118 of the body layer 211 and electrically connected to the body layer 211, so that the first conductive member 22 is electrically connected to the first body member 21. In an implementation, the first part 224 of the first conductive member 22 may be fastened to the extension portion 2115. The second part 225 of the first conductive member 22 may be fastened to the first side portion 2111.

For example, the first conductive member 22 may be fastened to the first body member 21 through welding. In an implementation, the first camera bracket 2 may further include a first welding joint 24. The first welding joint 24 may be fastened between the first conductive member 22 and the first body member 21. It may be understood that FIG. 9 merely shows, as an example, that there are three first welding joints 24. In another implementation, a quantity, shapes, sizes, positions, and the like of first welding joints 24 may be flexibly set according to an actual requirement. This is not specifically limited in this application.

It may be understood that the first conductive member 22 is fastened to the first body member 21 through welding, so that the first conductive member 22 are not likely to slide relative to the first body member 21, and a connection between the first conductive member 22 and the first body member 21 is reliable.

As shown in FIG. 9, for example, a positioning pillar 215 may protrude from one of the first body member 21 and the first conductive member 22, and a positioning hole 225 may be provided on the other one of the first body member 21 and the first conductive member 22, where at least a part of the positioning pillar 215 may be located in the positioning hole 225. In an implementation, the positioning pillar 215 may protrude from the first body member 21, and the positioning hole 225 may be provided on the first conductive member 22. It may be understood that FIG. 9 shows, as an example, that there are two positioning pillars 215 and two positioning holes 225, and shows, as an example, that the positioning pillar 215 is cylindrical and the positioning hole 225 is circular. In another implementation, sizes, shapes, positions, and quantities of positioning pillars 215 and positioning holes 225 may be flexibly set according to an actual requirement. This is not specifically limited in this application.

It may be understood that, because the positioning pillar 215 and the positioning hole 225 fit each other, the first conductive member 22 is not likely to slide relative to the first body member 21, and a connection between the first conductive member 22 and the first body member 21 is reliable.

In another implementation, the positioning hole 225 may be provided on the first body member 21, and the positioning pillar 215 may protrude from the first conductive member 22. The positioning hole 225 of the first body member 21 and the positioning pillar 215 of the first conductive member 22 fit each other, improving reliability of a connection between the first conductive member 22 and the first body member 21. This is not specifically limited in this application.

In another implementation, the first body member 21 and the first conductive member 22 may alternatively be fastened in another manner. This is not specifically limited in this application.

For example, the impedance of the first conductive member 22 may be less than the impedance of the antioxidation layer 212. In another implementation, the impedance of the first conductive member 22 and the impedance of the antioxidation layer 212 may alternatively satisfy another relationship. This is not specifically limited in this application.

Refer to FIG. 9. With reference to FIG. 6 and FIG. 7A, for example, the antioxidation layer 212 may cover the first area 2117 of the body layer 211, and the first conductive member 22 may cover the second area 2118 of the body layer 211. In other words, the antioxidation layer 212 may be in direct contact with the first conductive member 22.

Refer to FIG. 9. With reference to FIG. 6 and FIG. 7B, for example, the body layer 211 may include the protrusion 211a and the recess area 211b. In this way, the surface of the body layer 211 has large roughness and a large friction coefficient.

With reference to FIG. 6 and FIG. 7A, for example, the antioxidation layer 212 may be formed in the first area 2117 and the second area 2118 of the body layer 211 by using a surface treatment technique. The antioxidation layer 212 may cover the protrusion 211a and the recess area 211b of the body layer 211.

Refer to FIG. 9. With reference to FIG. 6, FIG. 7B, and FIG. 8B, for example, the first conductive member 22 may be fastened to the second area 2118 of the body layer 211 by using a welding technique. In addition, the first conductive member 22 may cover the protrusion 211a and the recess area 211b of the body layer 211, and the first conductive member body 221 on the first conductive member 22 may be provided with the protrusion 226 and the recess area 227. Welding may also be referred to as fusion welding, and is a manufacturing technique and technology of bonding a metal or another thermoplastic material in a manner of heating, a high temperature, or high pressure.

It may be understood that, in a process of welding the first conductive member 22 to the first body member 21, the welding joint may break down the antioxidation layer 212 in the second area 2118 (refer to FIG. 7A), so that the first conductive member 22 and the first body member 21 fuse together at the welding joint, and there is no hole or gap between the first conductive member 22 and the first body member 21. In other words, there may be no antioxidation layer 212 between the first conductive member 22 and the first body member 21. The antioxidation layer 212 may not cover the second area 2118, the first conductive member 22 and the first body member 21 may form a stable closed joint structure, and the body layer 211 in the second area 2118 is not likely to be oxidized due to contact with air. In addition, the first conductive member 22 may be in direct contact with the antioxidation layer 212, and the first conductive member 22 and the antioxidation layer 212 may jointly cover the body layer 211. In this way, the body layer 211 is not likely to be exposed to air, and therefore the body layer 211 is not easily to be oxidized, thereby avoiding an increase in the impedance of the body layer 211.

In another implementation, there may be a part of the antioxidation layer 212 between the first conductive member 22 and a surface of the first body member 21 other than a welding joint area. This is not specifically limited in this application.

In another implementation, the first conductive member 22 may alternatively be fastened to the second area 2118 of the body layer 211 in another manner. This is not specifically limited in this application.

FIG. 10 is a schematic partial cross-sectional view of the electronic device 1000 shown in FIG. 3 at the E-E line according to an implementation.

As shown in FIG. 10, for example, the first camera module 1 may be fastened to the first camera bracket 2. The ground end 14 of the first camera module 1 may be electrically connected to the first conductive member 22. In an implementation, the ground end 14 of the first camera module 1 may be electrically connected to the second part 225 of the first conductive member 22. It may be understood that FIG. 10 and the following related accompanying drawings merely show a position of the ground end 14 of the first camera module 1 as an example. In another implementation, the position of the ground end 14 of the first camera module 1 may be flexibly set according to an actual requirement. This is not specifically limited in this application.

It may be understood that the ground end 14 of the first camera module 1 is electrically connected to the first conductive member 22, so that the ground end 14 of the first camera module 1 can be electrically connected to the first body member 21. In this case, the antioxidation layer 212 may not need to be broken down. This results in a small fluctuation range of impedance between the ground end 14 of the first camera module 1 and the first camera bracket 2 and high stability, a stable electrical connection between the first conductive member 22 and the ground end 14 of the first camera module 1, and high stability of the camera assembly.

It may be understood that the ground end 14 of the first camera module 1 can be electrically connected to the first body member 21 through the second part 225 of the first conductive member 22 and the first part 224 of the first conductive member 22, and the first part 224 is bent relative to the second part 225. This helps implement an electrical connection between the first conductive member 22 and the ground end 14 of the first camera module 1. In addition, in an assembly process, physical interference may be not likely to occur between the first body member 21 and the ground end 14 of the first camera module 1, the first body member 21, the first conductive member 22, and the ground end 14 of the first camera module 1 are not likely to be damaged due to collision, and reliability between the first body member 21, the first conductive member 22, and the ground end 14 of the first camera module 1 is high.

For example, the camera assembly 100 may further include a first silver adhesive 3. A material of the first silver adhesive 3 may be a silver adhesive (which may also be referred to as a conductive silver adhesive), usually includes a conductive filler (a silver-related material, for example, silver powder and silver nanoparticles), matrix resin, and an additive, and is an adhesive with specific conductivity after curing.

For example, the first silver adhesive 3 may be fastened to the first conductive member 22 and the ground end 14 of the first camera module 1, and the first conductive member 22 may be electrically connected to the ground end 14 of the first camera module 1 through the first silver adhesive 3.

It may be understood that the first silver adhesive 3 has good adhesion and conductivity, so that a fixed connection and an electrical connection between the first conductive member 22 and the ground end 14 of the first camera module 1 can be implemented. In addition, the first silver adhesive 3 has specific fluidity before curing, so that the first silver adhesive 3 can adapt to space between the first conductive member 22 and the ground end 14 of the first camera module 1, and reliability of a fixed connection and an electrical connection between the first conductive member 22 and the ground end 14 of the first camera module 1 can be ensured.

For example, a quantity of first silver adhesive 3 may be controlled. It may be understood that, with the quantity of first silver adhesive 3 being controlled, a large quantity of and full first silver adhesives 3 can be in full contact with the first conductive member 22 and the ground end 14 of the first camera module 1.

In another implementation, the first conductive member 22 may be electrically connected to the first camera module 1 in another manner. This is not specifically limited in this application.

Refer to FIG. 10. With reference to FIG. 8B, for example, the first silver adhesive 3 may be fastened between the first conductive member 22 and the ground end 14 of the first camera module 1. In this way, the first silver adhesive 3 may be fastened to the protrusion 226 of the first conductive member 22, and at least a part of the first silver adhesive 3 may be located in the recess area 227 of the first conductive member 22.

It may be understood that a surface that is of the first conductive member 22 and that is electrically connected to the ground end 14 of the first camera module 1 has high roughness, and an electrical connection between the first conductive member 22 and the ground end 14 of the first camera module 1 is more reliable.

It may be understood that the impedance of the first conductive member 22 is set to be less than the impedance of the antioxidation layer 212, so that conductivity of the first conductive member 22 is better than conductivity of the antioxidation layer 212. In comparison with a solution in which the antioxidation layer 212 is electrically connected to the ground end 14 of the first camera module 1, an electrical connection between the first conductive member 22 and the ground end 14 of the first camera module 1 is more reliable.

It may be understood that impedance of the electrical connection member 23 is set to be less than the impedance of the antioxidation layer 212, so that the impedance of the electrical connection member 23 is small, the electrical connection member 23 has good conductivity, and an electrical connection between the electrical connection member 23 and the housing 200 is more reliable.

For example, impedance between the first conductive member 22 and the first camera module 1 may be less than or equal to 5 Ω. For example, the impedance between the first conductive member 22 and the first camera module 1 may be equal to 0.3 Ω, 1 Ω, 2.8 Ω, 3.3 Ω, 4 Ω, 4.6 Ω, 5 Ω, or the like.

It may be understood that the impedance between the first conductive member 22 and the first camera module 1 is set to be less than or equal to 5 Ω, so that an impedance value of an electrical connection path between the first conductive member 22 and the ground end 14 of the first camera module 1 is small, and an electrical connection between the first conductive member 22 and the ground end 14 of the first camera module 1 is reliable.

In another implementation, the impedance between the first conductive member 22 and the first camera module 1 may alternatively satisfy another range. This is not specifically limited in this application.

For example, impedance between the first conductive member 22 and the body layer 211 may be less than or equal to 1 Ω (ohm). For example, the impedance between the first conductive member 22 and the body layer 211 may be equal to 0.06 Ω, 0.1 Ω, 0.3 Ω, 0.5 Ω, 0.67 Ω, 0.8 Ω, 0.95 Ω, 1 Ω, or the like.

It may be understood that the impedance between the first conductive member 22 and the body layer 211 is set to be less than or equal to 1 Ω, so that the impedance between the first conductive member 22 and the body layer 211 is small, conductivity of an electrical connection path between the first conductive member 22 and the body layer 211 is good, and an electrical connection between the first conductive member 22 and the body layer 211 is reliable.

In another implementation, the impedance between the first conductive member 22 and the body layer 211 may alternatively satisfy another range. This is not specifically limited in this application.

For example, the impedance of the first conductive member 22 may be less than or equal to 1 Ω. For example, the impedance of the first conductive member 22 may be equal to 0.05 Ω, 0.1 Ω, 0.5 Ω, 0.67 Ω, 0.8 Ω, 0.95 Ω, 0.99 Ω, 1 Ω, or the like.

It may be understood that the impedance of the first conductive member 22 is set to be less than or equal to 1 Ω, so that the impedance of the first conductive member 22 is small, conductivity of the first conductive member 22 is good, and an electrical connection between the first conductive member 22 and the first body member 21 or between the first conductive member 22 and another mechanical part is more reliable.

In another implementation, the impedance of the first conductive member 22 may alternatively satisfy another range. This is not specifically limited in this application.

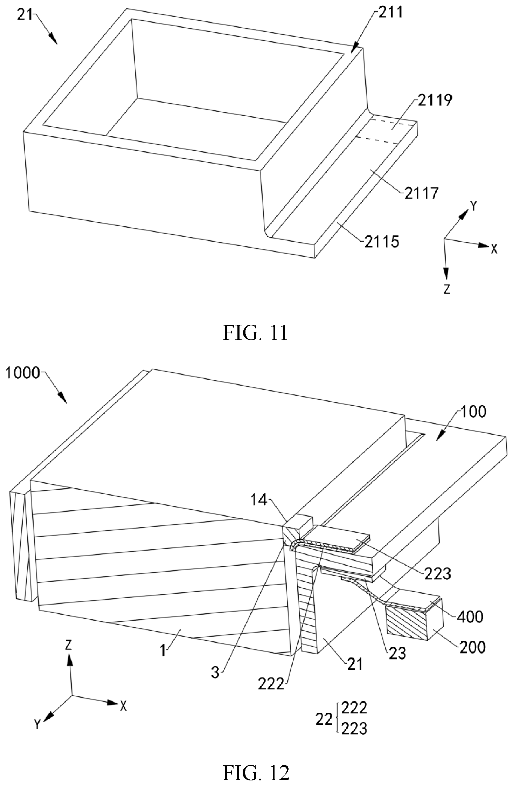

FIG. 11 is a diagram of a partial structure of the first body member 21 shown in FIG. 6 from another angle.

As shown in FIG. 11, for example, the body layer 211 may further include a third area 2119. The third area 2119 and the second area 2118 (refer to FIG. 6) may be spaced apart. It may be understood that, in FIG. 11, the first area 2117 and the third area 2119 are merely schematically distinguished by using dashed lines. In another implementation, the first area 2117 and the third area 2119 may be flexibly set according to an actual requirement. This is not specifically limited in this application.

Refer to FIG. 11. With reference to FIG. 6, the third area 2119 may be located on the extension portion 2115. The third area 2119 and the second area 2118 may be disposed back to each other.

As shown in FIG. 9 to FIG. 11, for example, the electrical connection member 23 may be fastened to the third area 2119. The electrical connection member 23 may be electrically connected to the body layer 211, so that the electrical connection member 23 is electrically connected to the first body member 21.

It may be understood that the electrical connection member 23 and the first conductive member 22 may be electrically connected through the first body member 21, and the first conductive member 22 may be electrically connected to another mechanical part through the first body member 21 and the electrical connection member 23.

For example, the impedance of the electrical connection member 23 may be less than the impedance of the antioxidation layer 212.

In another implementation, the impedance of the electrical connection member 23 and the impedance of the antioxidation layer 212 may alternatively satisfy another relationship. This is not specifically limited in this application.

As shown in FIG. 9, for example, the electrical connection member 23 may be fastened to the first body member 21 through welding. In an implementation, the first camera bracket 2 may further include a second welding joint 25. The second welding joint 25 may be fastened between the electrical connection member 23 and the first body member 21. It may be understood that FIG. 9 merely shows, as an example, that there are three second welding joints 25. In another implementation, a quantity, positions, sizes, shapes, and the like of second welding joints 25 may be flexibly set according to an actual requirement. This is not specifically limited in this application.

It may be understood that the electrical connection member 23 is fastened to the first body member 21 through welding, so that the electrical connection member 23 is not likely to slide relative to the first body member 21, and a connection between the electrical connection member 23 and the first body member 21 is reliable.

As shown in FIG. 10, for example, the electrical connection member 23 may be fastened to and electrically connected to the housing 200. In other words, the first camera bracket 2 may be electrically connected to the housing 200 through the electrical connection member 23. In this way, the ground end 14 of the first camera module 1 may be electrically connected to the housing 200 through the first conductive member 22, the first body member 21, and the electrical connection member 23, to implement grounding of the first camera module 1.

It may be understood that the first camera bracket 2 can implement an electrical connection between the ground end 14 of the first camera module 1 and the housing 200, to implement grounding of the first camera module 1. In other words, the first camera bracket 2 can mount the first camera module 1, and can also implement grounding of the first camera module 1.

In an implementation, the electrical connection member 23 may be fastened to and electrically connected to the middle frame of the housing 200. In other words, the first camera bracket 2 may be electrically connected to the middle frame of the housing 200 through the electrical connection member 23. In this way, the ground end 14 of the first camera module 1 may be electrically connected to the middle frame of the housing 200 through the first conductive member 22, the first body member 21, and the electrical connection member 23, to implement grounding of the first camera module 1.

As shown in FIG. 10, for example, the electronic device 1000 may further include a dome 400. For example, the dome 400 may be fastened between the electrical connection member 23 and the housing 200. The dome 400 may be fastened to the electrical connection member 23 and the housing 200 by using a technique, for example, welding.

For example, the dome 400 may alternatively be electrically connected to the electrical connection member 23 and the housing 200. In other words, the electrical connection member 23 may be electrically connected to the housing 200 through the dome 400.

It may be understood that the dome 400 can implement an electrical connection between the electrical connection member 23 and the housing 200. In this way, the dome 400 can implement grounding of the first camera module 1.

In another implementation, the electrical connection member 23 may alternatively be electrically connected to the housing 200 through a mechanical part in another form and in another manner. This is not specifically limited in this application.

For example, the electrical connection member 23 may be a spring plate. In another implementation, the electrical connection member 23 may alternatively be a mechanical part in another form. This is not specifically limited in this application.

For example, experimental data of related tests of the first conductive member 22 is shown in Table 1 to Table 3.

**Table 1 Drop TTF test data table of the first conductive member 22**

| Number | First conductive member 22-PVCM | First conductive member 22-LVCM | First conductive member 22-BTB |
|---|---|---|---|
| 1 | 1.6 | 0.6 | 0.2 |
| 2 | 0.3 | 0.3 | 0.1 |
| 3 | 0.2 | 0.4 | 0.2 |
| 4 | 0.7 | 0.6 | 0.2 |
| 5 | 0.3 | 0.2 | 0.3 |
| 6 | 0.3 | 0.3 | 0.2 |
| 7 | 0.3 | 0.4 | 0.2 |
| 8 | 0.6 | 0.2 | 0.2 |
| 9 | 1 | 0.3 | 0.2 |
| 10 | 0.8 | 0.5 | 0.1 |
| 11 | 0.2 | 0.2 | 0.2 |
| 12 | 0.7 | 0.5 | 0.2 |
| 13 | 0.7 | 0.8 | 0.1 |
| 14 | 0.5 | 0.2 | 0.4 |
| 15 | 0.3 | 1.4 | 0.8 |
| 16 | 0.2 | 0.2 | 0.2 |
| 17 | 0.5 | 0.6 | 0.3 |
| 18 | 0.6 | 0.7 | 0.2 |
| 19 | 0.5 | 0.5 | 0.2 |
| 20 | 0.6 | 0.4 | 0.3 |

PVCM is the prism motor 112 (refer to FIG. 2). First conductive member 22-PVCM is impedance between the first conductive member 22 and the prism motor 112, in a unit of Ω. LVCM is the lens motor 122 (refer to FIG. 2). First conductive member 22-LVCM is impedance between the first conductive member 22 and the lens motor 122, in a unit of Ω. First conductive member 22-BTB is impedance between the first conductive member 22 and a connector (board to board connector, BTB) (not shown in the figure) of the circuit board 132 (refer to FIG. 2), in a unit of Ω. It may be understood that, when a same term appears in the following, it indicates a same meaning. Details are not described again.

It may be understood that, after a drop test, the impedance between the first conductive member 22 and the prism motor 112, the impedance between the first conductive member 22 and the lens motor 122, and the impedance between the first conductive member 22 and the connector of the circuit board 132 may all be kept less than 1 Ω. Anti-drop performance of the first conductive member 22 is good, and reliability of an electrical connection between the first conductive member 22 and another mechanical part is high.

**Table 2 High-temperature high-humidity operation test data table of the first conductive member 22**

| Number | First conductive member 22-PVCM | First conductive member 22-LVCM | First conductive member 22-BTB | Number | First conductive member 22-PVCM | First conductive member 22-LVCM | First conductive member 22-BTB |
|---|---|---|---|---|---|---|---|
| 1 | 0.6 | 0.8 | 0.4 | 22 | 0.2 | 0.3 | 0.2 |
| 2 | 0.7 | 0.5 | 0.3 | 23 | 0.2 | 0.5 | 0.2 |
| 3 | 0.6 | 0.3 | 0.3 | 24 | 0.2 | 0.2 | 0.2 |
| 4 | 0.3 | 0.2 | 0.2 | 25 | 1.9 | 0.4 | 0.3 |
| 5 | 0.2 | 0.4 | 0.3 | 26 | 0.5 | 0.2 | 0.2 |
| 6 | 0.2 | 0.3 | 0.3 | 27 | 0.2 | 0.3 | 0.3 |
| 7 | 0.2 | 0.4 | 0.3 | 28 | 0.7 | 0.4 | 0.4 |
| 8 | 0.3 | 0.3 | 1.9 | 29 | 0.3 | 0.6 | 0.4 |
| 9 | 0.4 | 0.3 | 0.2 | 30 | 0.3 | 0.4 | 0.3 |
| 10 | 0.3 | 0.3 | 0.3 | 31 | 0.3 | 0.4 | 0.3 |
| 11 | 0.3 | 0.3 | 0.3 | 32 | 0.4 | 0.4 | 0.5 |
| 12 | 0.3 | 0.2 | 0.7 | 33 | 0.2 | 0.6 | 0.3 |
| 13 | 0.3 | 0.2 | 0.4 | 34 | 0.7 | 0.4 | 0.9 |
| 14 | 0.3 | 0.3 | 0.3 | 35 | 1.1 | 0.4 | 0.3 |
| 15 | 0.2 | 0.4 | 0.2 | 36 | 0.3 | 0.4 | 0.3 |
| 16 | 0.3 | 0.2 | 0.6 | 37 | 0.2 | 0.5 | 0.3 |
| 17 | 0.3 | 0.4 | 0.3 | 38 | 0.2 | 0.7 | 0.2 |
| 18 | 0.3 | 0.2 | 0.2 | 39 | 0.3 | 0.4 | 0.3 |
| 19 | 0.3 | 0.2 | 0.3 | 40 | 0.5 | 0.6 | 0.4 |
| 20 | 0.3 | 0.4 | 0.4 | 41 | 0.4 | 0.3 | 0.3 |
| 21 | 0.2 | 0.3 | 0.5 | / | / | / | / |

Performing a high-temperature high-humidity test on the first conductive member 22 is to test, after the first conductive member 22 is placed in an environment with a high temperature and a high humidity for a period of time, whether a function of the first conductive member 22 is normal.

It may be understood that, after the first conductive member 22 is placed at a high temperature and a high humidity for a period of time, the impedance between the first conductive member 22 and the prism motor 112, the impedance between the first conductive member 22 and the lens motor 122, and the impedance between the first conductive member 22 and the connector of the circuit board 132 may all be kept less than 1 Ω. The first conductive member 22 has both good heat resistance and moisture resistance, stability of the first conductive member 22 is good, and reliability of an electrical connection between the first conductive member 22 and another mechanical part is high.

**Table 3 Dual-85 TTF test data table of the first conductive member 22**

| Number | First conductive member 22-PVCM | First conductive member 22-LVCM | First conductive member 22-BTB | Number | First conductive member 22-PVCM | First conductive member 22-LVCM | First conductive member 22-BTB |
|---|---|---|---|---|---|---|---|
| 1 | 0.5 | 0.5 | 0.3 | 17 | 0.3 | 0.2 | 1.5 |
| 2 | 0.2 | 0.4 | 0.2 | 18 | 0.3 | 0.2 | 0.2 |
| 3 | 0.9 | 0.6 | 0.2 | 19 | 0.5 | 0.7 | 0.2 |
| 4 | 0.3 | 0.7 | 0.2 | 20 | 0.3 | 0.2 | 0.2 |
| 5 | 0.2 | 0.2 | 0.3 | 21 | 0.5 | 0.7 | 0.2 |
| 6 | 0.4 | 0.4 | 0.5 | 22 | 0.3 | 1.2 | 0.7 |
| 7 | 0.2 | 0.5 | 0.2 | 23 | 0.4 | 0.6 | 0.4 |
| 8 | 0.7 | 0.5 | 0.1 | 24 | 0.5 | 0.3 | 0.8 |
| 9 | 0.2 | 0.4 | 0.2 | 25 | 1.4 | 0.4 | 0.2 |
| 10 | 0.5 | 0.4 | 0.5 | 26 | 0.3 | 1 | 0.2 |
| 11 | 0.3 | 0.4 | 0.4 | 27 | 0.4 | 0.7 | 0.3 |
| 12 | 0.8 | 0.8 | 0.3 | 28 | 0.3 | 0.4 | 0.2 |
| 13 | 0.2 | 0.2 | 0.5 | 29 | 0.4 | 0.3 | 0.3 |
| 14 | 0.2 | 0.9 | 0.3 | 30 | 0.5 | 0.4 | 0.5 |
| 15 | 0.2 | 0.2 | 0.5 | 31 | 0.2 | 0.4 | 0.3 |
| 16 | 0.4 | 0.4 | 0.3 | 32 | 1.4 | 0.7 | 0.3 |

A dual-85 test is a test of determining, after the first conductive member 22 is placed for 240 hours at a temperature of 85°C (degrees Celsius) and a humidity of 85%, whether the function of the first conductive member 22 is normal. It may be understood that, when a same term appears in the following, it indicates a same meaning. Details are not described again.

It may be understood that, after the dual-85 test, the impedance between the first conductive member 22 and the prism motor 112, the impedance between the first conductive member 22 and the lens motor 122, and the impedance between the first conductive member 22 and the connector of the circuit board 132 may all be kept less than 5 Ω. The first conductive member 22 has both good heat resistance and moisture resistance, stability of the first conductive member 22 is good, and reliability of an electrical connection between the first conductive member 22 and another mechanical part is high.

Second implementation: It may be understood that, in a case of no conflict, a related design of the first camera bracket 2 in the first implementation may also be directly applied to a structural design of a first camera bracket 2 shown in this implementation. Technical content that is largely the same as that of the first camera bracket 2 shown in the first implementation is not described in detail again in this implementation.

FIG. 12 is a schematic partial cross-sectional view of the electronic device 1000 shown in FIG. 3 at an E-E line according to another implementation.

As shown in FIG. 12, a first conductive member 22 may be a plating layer. The plating layer may be a layer of metal or alloy thin film with specific performance that covers a surface of a metal or another material by using a specific technique method.

For example, the first conductive member 22 may include a first plating layer 222 and a second plating layer 223.

For example, reducibility of the first plating layer 222 may be greater than reducibility of the second plating layer 223.

It may be understood that the reducibility of the first plating layer 222 is set to be greater than the reducibility of the second plating layer 223, so that activity of the second plating layer 223 may be weaker than activity of the first plating layer 222, and the second plating layer 223 can stabilize the first plating layer 222 and prevent the first plating layer 222 from falling off.

In another implementation, the reducibility of the first plating layer 222 and the reducibility of the second plating layer 223 may alternatively satisfy another relationship. This is not specifically limited in this application.

For example, a material of the first plating layer 222 may include nickel, chromium, or zinc.

It may be understood that the first plating layer 222 has small resistance, and the first plating layer 222 has good conductivity. This can ensure a reliable electrical connection between the first plating layer 222 and another mechanical part. In addition, the first plating layer 222 is more easily fastened to a first body member 21.

In another implementation, a material of the first plating layer 222 may alternatively include another material. This is not specifically limited in this application.

For example, a material of the second plating layer 223 may include gold.

It may be understood that the second plating layer 223 can keep the first plating layer 222 stable, so that the first plating layer 222 is not likely to fall off, and electrical conduction between the first plating layer 222 and another mechanical part is ensured.

In another implementation, the material of the second plating layer 223 may alternatively include another material. This is not specifically limited in this application.

For example, the first plating layer 222 may be fastened to the first body member 21, and the second plating layer 223 may be fastened to a side that is of the first plating layer 222 and that is away from the first body member 21. The first plating layer 222 may be electrically connected to the first body member 21, and the second plating layer 223 may be electrically connected to the first plating layer 222.

With reference to FIG. 7A, for example, impedance of the first plating layer 222 may be less than impedance of an antioxidation layer 212.

In another implementation, the impedance of the first plating layer 222 and the impedance of the antioxidation layer 212 may alternatively satisfy another relationship. This is not specifically limited in this application.

For example, the ground end 14 of the first camera module 1 may be electrically connected to the first conductive member 22 through a first silver adhesive 3. In an implementation, the ground end 14 of the first camera module 1 may be electrically connected to the second plating layer 223 through the first silver adhesive 3. In other words, the ground end 14 of the first camera module 1 may be electrically connected to the first body member 21 through the first silver adhesive 3, the second plating layer 223, and the first plating layer 222.

It may be understood that the impedance of the first plating layer 222 is set to be less than the impedance of the antioxidation layer 212, so that the conductivity of the first plating layer 222 is better than conductivity of the antioxidation layer 212, and an electrical connection between the first conductive member 22 and the ground end 14 of the first camera module 1 is more reliable.

For example, an electrical connection member 23 may be electrically connected to the first body member 21, and electrically connected to the housing 200 through a dome 400. In other words, the first body member 21 may be electrically connected to the housing 200 through the electrical connection member 23 and the dome 400.

It may be understood that the ground end 14 of the first camera module 1 may be electrically connected to the housing 200 through the first conductive member 22, the first body member 21, the electrical connection member 23, and the dome 400, to implement grounding. In comparison with the first implementation, the first conductive member 22 in this implementation has a smaller size, which is more conducive to miniaturization of the camera assembly 100 and the electronic device 1000.

In an implementation, the electrical connection member 23 may be electrically connected to the first body member 21 and the middle frame of the housing 200. The ground end 14 of the first camera module 1 may be electrically connected to the middle frame of the housing 200 through the first conductive member 22, the first body member 21, and the electrical connection member 23, to implement grounding of the ground end 14 of the first camera module 1.

Refer to FIG. 9. With reference to FIG. 6 and FIG. 7B, for example, a protrusion 211a or a recess area 211b is formed in a second area 2118 of a body layer 211. In this way, the second area 2118 of the body layer 211 has large roughness and a large friction coefficient. The antioxidation layer 212 may be formed in a first area 2117 and the second area 2118 of the body layer 211 by using a surface treatment technique, and the antioxidation layer 212 may cover the protrusion 211a and the recess area 211b of the body layer 211.

For example, laser engraving processing may be performed on the antioxidation layer 212 in the second area 2118 of the body layer 211. In this way, the second area 2118 of the body layer 211 may be directly exposed to air. In other words, the antioxidation layer 212 in this implementation may not cover the second area 2118 of the body layer 211. Laser engraving may also be referred to as laser carving or laser marking. In laser engraving, a laser beam with a high energy density can illuminate a surface of a workpiece, to melt or gasify a surface material of the workpiece, so as to form a mark, a pattern, a text, or the like that lasts for a long time on a surface of an object.

Refer to FIG. 12. With reference to FIG. 6, for example, the first plating layer 222 and the second plating layer 223 may be formed in the second area 2118 of the body layer 211 by using a technique, for example, electroplating, the first plating layer 222 and the second plating layer 223 may cover the protrusion 211a and the recess area 211b of the body layer 211, and at least a part of the first plating layer 222 and the second plating layer 223 may be located in the recess area 211b of the body layer 211. In a process of forming the first plating layer 222 and the second plating layer 223, the first area 2117 may be shielded by using a tool, for example, a shielding jig, so that the first plating layer 222 and the second plating layer 223 are not formed in the first area 2117, thereby reducing costs.

In another implementation, the first plating layer 222 and the second plating layer 223 may alternatively be formed in the second area 2118 of the body layer 211 by using another technique. This is not specifically limited in this application.

With reference to FIG. 6 and FIG. 7A, for example, the antioxidation layer 212 may be formed in the first area 2117 of the body layer 211 by using a surface treatment technique. In a process of forming the antioxidation layer 212, the first conductive member 22 may be shielded by using a tool, for example, a shielding jig, so that the antioxidation layer 212 is not formed on the first conductive member 22, thereby avoiding an increase in impedance of the first conductive member 22, and avoiding a decrease in reliability of an electrical connection relationship between the first conductive member 22 and another mechanical part.

In another implementation, the antioxidation layer 212 may alternatively be formed in the first area 2117 of the body layer 211 by using another technique. This is not specifically limited in this application.

Refer to FIG. 12. With reference to FIG. 7B, for example, the first silver adhesive 3 may be fastened between the first conductive member 22 and the ground end 14 of the first camera module 1. In this way, the first silver adhesive 3 may be fastened to the protrusion 211a of the body layer 211, and at least a part of the first silver adhesive 3 may be located in the recess area 211b of the body layer 211.

It may be understood that a surface that is of the first conductive member 22 and that is electrically connected to the ground end 14 of the first camera module 1 has high roughness, and an electrical connection between the first conductive member 22 and the ground end 14 of the first camera module 1 is more reliable.

For example, related experimental data of a dual-85 test of the first conductive member 22 is shown in Table 4.

**Table 4 Table of comparison between impedance of the first conductive member 22 before and after the dual-85 test**

| Number | Impedance before dual-85 | Impedance after dual-85 |
|---|---|---|
| 1 | 0.849 | 0.7 |
| 2 | 0.769 | 0.3 |
| 3 | 0.922 | 0.3 |
| 4 | 2.713 | 2.6 |
| 5 | 0.893 | 0.3 |
| 6 | 0.97 | 0.6 |
| 7 | 1.132 | 0.9 |
| 8 | 0.75 | 0.2 |
| 9 | 0.948 | 0.8 |
| 10 | 0.744 | 0.2 |

It may be understood that the impedance of the first conductive member 22 after the dual-85 test may be kept less than 1 Ω, the first conductive member 22 has both good heat resistance and moisture resistance, stability of the first conductive member 22 is good, and reliability of an electrical connection between the first conductive member 22 and another mechanical part is high.

Third implementation: It may be understood that, in a case of no conflict, related designs of first camera brackets 2 in the first implementation and the second implementation may also be directly applied to a structural design of a first camera bracket 2 shown in this implementation. Technical content that is largely the same as that of the first camera brackets 2 shown in the first implementation and the second implementation is not described in detail again in this implementation.

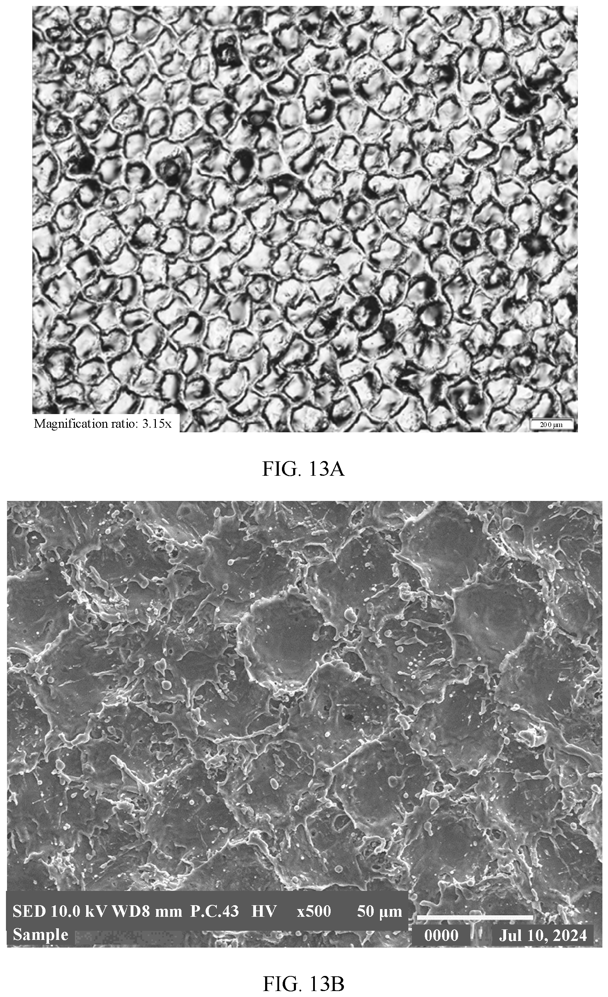

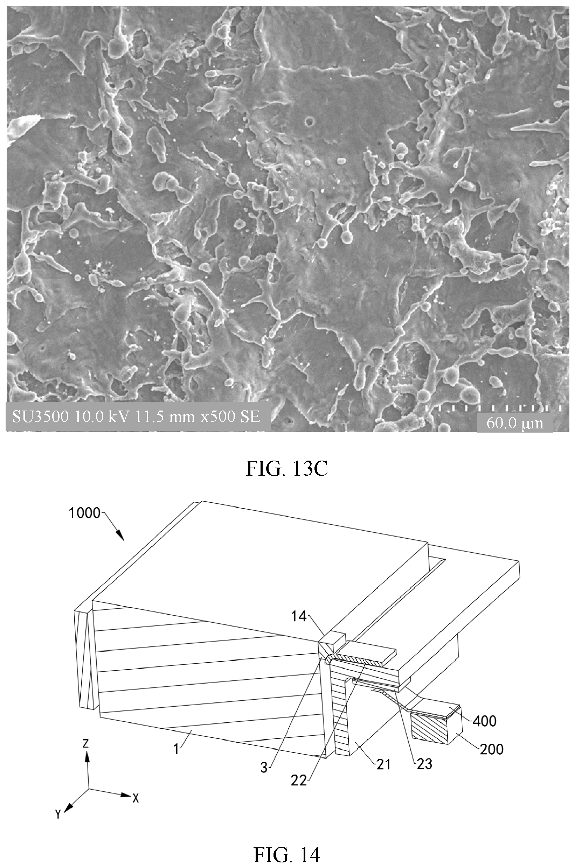

FIG. 13A is a surface appearance diagram 1 of a first conductive member 22 shown in FIG. 5 according to another implementation. FIG. 13B is a surface appearance diagram 2 of the first conductive member 22 shown in FIG. 5 according to another implementation. FIG. 13C is a surface appearance diagram 3 of the first conductive member 22 shown in FIG. 5 according to another implementation. It may be understood that FIG. 13A to FIG. 13C may be result diagrams obtained by testing the first conductive member 22 in this implementation by using a scanning electron microscope (scanning electron microscope, SEM). In another implementation, the surface appearance diagram of the first conductive member 22 may alternatively be obtained in another manner. This is not specifically limited in this application.

As shown in FIG. 13A to FIG. 13C, the first conductive member 22 may be a laser engraving layer. A surface of the first conductive member 22 is regular, with laser engraving pits demonstrating a uniform depth and basically complete coverage.

For example, a surface density P of the first conductive member 22 may satisfy: P≥95%. The surface density indicates a density degree of a surface of a material, and reflects a microstructure characteristic and tightness of material distribution of the surface of the material. For example, P may be equal to 95%, 96%, 97%, 98%, 99%, or 99.9%.

It may be understood that the surface density P of the first conductive member 22 is set to be greater than or equal to 95%, so that a density degree of the surface of the first conductive member 22 is high, the surface of the first conductive member 22 is not likely to be oxidized, impedance of the first conductive member 22 is not likely to be increased, and an electrical connection between the first conductive member 22 and another mechanical part is reliable.

In another implementation, the surface density P of the first conductive member 22 may alternatively satisfy another range. This is not specifically limited in this application.

For example, a material of the first conductive member 22 may include magnesium oxide.

It may be understood that the first conductive member 22 can prevent a first body member 21 from being oxidized, thereby avoiding an increase in impedance of the first body member 21, and avoiding a decrease in reliability of an electrical connection between the first body member 21 and another mechanical part.

In another implementation, the material of the first conductive member 22 may alternatively include another material. This is not specifically limited in this application.

FIG. 14 is a schematic partial cross-sectional view of the electronic device 1000 shown in FIG. 3 at an E-E line according to still another implementation.

As shown in FIG. 14, for example, the ground end 14 of the first camera module 1 may be electrically connected to the housing 200 through a first silver adhesive 3, the first conductive member 22, the first body member 21, an electrical connection member 23, and a dome 400, to implement grounding.

It may be understood that, in comparison with the first implementation, a processing technique of the first conductive member 22 in this implementation is simpler, and no shielding jig is required.

Refer to FIG. 9. With reference to FIG. 6 and FIG. 7B, for example, a protrusion 211a or a recess area 211b is formed in a second area 2118 of a body layer 211. In this way, the second area 2118 of the body layer 211 has large roughness and a large friction coefficient. An antioxidation layer 212 may be formed in a first area 2117 and the second area 2118 of the body layer 211 by using a surface treatment technique, and the antioxidation layer 212 may cover the protrusion 211a and the recess area 211b of the body layer 211.

Refer to FIG. 9. With reference to FIG. 6, for example, laser engraving processing may be performed on the antioxidation layer 212 in the second area 2118 of the body layer 211. In other words, in FIG. 7A, the first conductive member 22 may be formed, by using a laser engraving technique, on the antioxidation layer 212 located in the second area 2118 of the body layer 211, the first conductive member 22 may cover the protrusion 211a and the recess area 211b of the body layer 211, and at least a part of the first conductive member 22 may be located in the recess area 211b of the body layer 211. There may be no or a small quantity of antioxidation layers 212 between the first conductive member 22 and the second area 2118 of the body layer 211. A linear velocity of laser light for laser engraving may be less than or equal to 3000 mm/s (millimeters per second).

In another implementation, the first conductive member 22 may be formed in the second area 2118 of the body layer 211 by using another technique. This is not specifically limited in this application.

Refer to FIG. 14. With reference to FIG. 7B, for example, the first silver adhesive 3 may be fastened between the first conductive member 22 and the ground end 14 of the first camera module 1. In this way, the first silver adhesive 3 may be fastened to the protrusion 211a of the body layer 211, and at least a part of the first silver adhesive 3 may be located in the recess area 211b of the body layer 211.

It may be understood that a surface that is of the first conductive member 22 and that is electrically connected to the ground end 14 of the first camera module 1 has high roughness, and an electrical connection between the first conductive member 22 and the ground end 14 of the first camera module 1 is more reliable.

For example, a related test data table of the first conductive member 22 is shown in Table 5.

**Table 5 Test data table of the first conductive member 22**

| Number | First conductive member 22-BTB | LVCM-BTB | PVCM-BTB | Number | First conductive member 22-BTB | LVCM-BTB | PVCM-BTB |
|---|---|---|---|---|---|---|---|
| 1 | 0.3 | 0.5 | 0.4 | 17 | 0.5 | 0.5 | 0.4 |
| 2 | 0.5 | 0.3 | 0.5 | 18 | 0.5 | 0.6 | 0.6 |
| 3 | 0.4 | 0.3 | 0.4 | 19 | 0.5 | 0.4 | 0.7 |
| 4 | 0.3 | 0.5 | 0.5 | 20 | 0.5 | 0.3 | 0.5 |
| 5 | 0.4 | 0.8 | 0.5 | 21 | 0.4 | 0.8 | 0.6 |
| 6 | 0.3 | 0.4 | 0.7 | 22 | 0.3 | 0.3 | 0.8 |
| 7 | 0.3 | 0.6 | 0.5 | 23 | 0.5 | 0.5 | 0.5 |
| 8 | 0.8 | 0.5 | 0.6 | 24 | 0.6 | 0.6 | 1.2 |
| 9 | 0.7 | 0.7 | 0.4 | 25 | 0.3 | 0.5 | 0.4 |
| 10 | 0.4 | 0.5 | 0.4 | 26 | 2.3 | 0.6 | 1 |
| 11 | 0.4 | 0.5 | 0.4 | 27 | 0.6 | 0.6 | 0.7 |
| 12 | 0.5 | 0.8 | 0.6 | 28 | 0.4 | 0.8 | 0.6 |
| 13 | 0.7 | 0.5 | 0.4 | 29 | 0.4 | 0.8 | 0.7 |
| 14 | 0.8 | 0.7 | 0.3 | 30 | 0.9 | 0.6 | 0.7 |
| 15 | 0.3 | 0.8 | 0.4 | 31 | 0.6 | 0.5 | 0.6 |
| 16 | 0.4 | 0.6 | 0.8 | 32 | 0.9 | 0.7 | 0.7 |

After the first conductive member 22 is placed in an environment with a temperature of 60°C and a humidity of 95% for a period of time, data in Table 5 is obtained by testing the first conductive member 22. First conductive member 22-BTB is impedance between the first conductive member 22 and a connector (not shown in the figure) of the circuit board 132 (refer to FIG. 2), in a unit of Ω. LVCM-BTB is impedance between the lens motor 122 (refer to FIG. 2) and the connector of the circuit board 132, in a unit of Ω. PVCM-BTB is impedance between the prism motor 112 (refer to FIG. 2) and the connector of the circuit board 132, in a unit of Ω.

It may be understood that, after the first conductive member 22 is placed at a high temperature and a high humidity for a period of time, the impedance between the first conductive member 22 and the connector of the circuit board 132, the impedance between the lens motor 122 and the connector of the circuit board 132, and the impedance between the prism motor 112 and the connector of the circuit board 132 are all small, the first conductive member 22 has both good heat resistance and moisture resistance, stability of the first conductive member 22 is good, and reliability of an electrical connection between the first conductive member 22 and another mechanical part is high.

Fourth implementation: It may be understood that, in a case of no conflict, related designs of first camera brackets 2 in the first implementation to the third implementation may also be directly applied to a structural design of a first camera bracket 2 shown in this implementation. Technical content that is largely the same as that of the first camera brackets 2 shown in the first implementation to the third implementation is not described in detail again in this implementation.

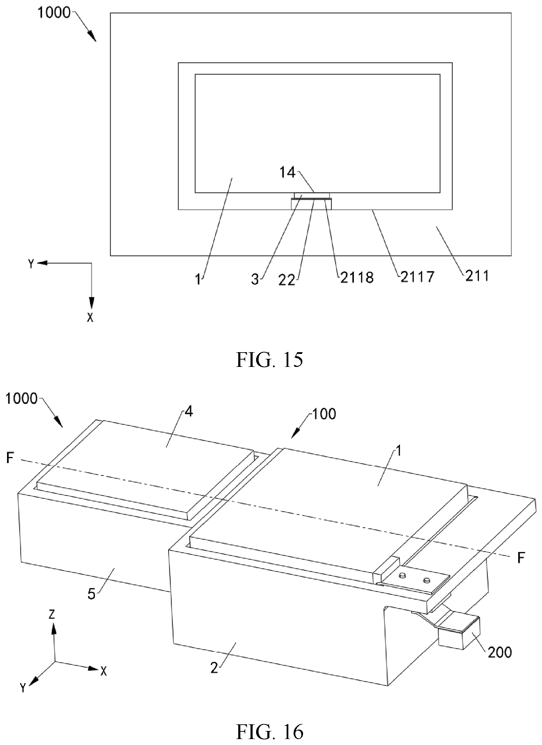

FIG. 15 is a diagram of a partial structure of the electronic device 1000 shown in FIG. 1 according to another implementation.

As shown in FIG. 15, for example, a second area 2118 of a body layer 211 may protrude relative to a first area 2117 of the body layer 211 in a direction close to the ground end 14 of the first camera module 1. The second area 2118 may be disposed opposite to the ground end 14 of the first camera module 1.

For example, a first conductive member 22 may be a coating. The coating is a thin layer of material that covers a surface of an object, and is attached to a substrate by using a coating technique, to improve performance of the substrate or give a specific function to the substrate.

For example, the first conductive member 22 may be fastened to the second area 2118 of the body layer 211, and is electrically connected to the second area 2118 of the body layer 211 and the ground end 14 of the first camera module 1 through a first silver adhesive 3.

It may be understood that, in comparison with the first implementation, because the second area 2118 protrudes relative to the first area 2117, the first conductive member 22 is more easily formed in the second area 2118 in this implementation.

For example, a material of the first conductive member 22 may include nickel, chromium, zinc, or gold.

It may be understood that the first conductive member 22 has small resistance and good conductivity, and an electrical connection between the first conductive member 22 and another mechanical part is more reliable. In addition, stability of the first conductive member 22 is good, the first conductive member 22 is not likely to fall off, and electrical conduction between the first conductive member 22 and another mechanical part can be ensured.

In another implementation, the material of the first conductive member 22 may alternatively include another material. This is not specifically limited in this application.

Refer to FIG. 9. With reference to FIG. 6 and FIG. 7B, for example, a protrusion 211a or a recess area 211b is formed in the second area 2118 of the body layer 211. In this way, the second area 2118 of the body layer 211 has large roughness and a large friction coefficient. An antioxidation layer 212 may be formed in the first area 2117 and the second area 2118 of the body layer 211 by using a surface treatment technique, and the antioxidation layer 212 may cover the protrusion 211a and the recess area 211b of the body layer 211.

For example, laser engraving processing may be performed on the antioxidation layer 212 in the second area 2118 of the body layer 211. In this way, the second area 2118 of the body layer 211 may be directly exposed to air. In other words, the antioxidation layer 212 in this implementation may not cover the second area 2118 of the body layer 211.

As shown in FIG. 15, for example, the first conductive member 22 may be formed in the second area 2118 by using a coating or dipping technique. The first conductive member 22 may cover the protrusion 211a and the recess area 211b of the body layer 211. At least a part of the first conductive member 22 may be located in the recess area 211b of the body layer 211.

It may be understood that, when a coating or dipping technique is performed on the second area 2118 that protrudes relative to the first area 2117, a shielding jig may not be required, and the technique is simpler.

In another implementation, the first conductive member 22 may alternatively be formed in the second area 2118 by using another technique. This is not specifically limited in this application.

Refer to FIG. 15. With reference to FIG. 7B, for example, the first silver adhesive 3 may be fastened between the first conductive member 22 and the ground end 14 of the first camera module 1. In this way, the first silver adhesive 3 may be fastened to the protrusion 211a of the body layer 211, and at least a part of the first silver adhesive 3 may be located in the recess area 211b of the body layer 211.

It may be understood that a surface that is of the first conductive member 22 and that is electrically connected to the ground end 14 of the first camera module 1 has high roughness, and an electrical connection between the first conductive member 22 and the ground end 14 of the first camera module 1 is more reliable.

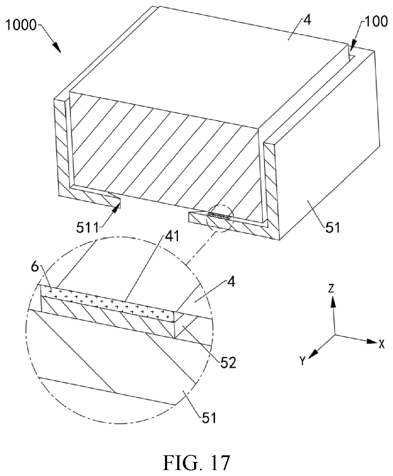

FIG. 16 is a diagram of a partial structure of the electronic device 1000 shown in FIG. 1 according to still another implementation. FIG. 17 is a schematic partial cross-sectional view of the electronic device 1000 shown in FIG. 16 at an F-F line according to an implementation.

As shown in FIG. 16 and FIG. 17, the camera assembly 100 may further include a second camera module 4 and a second camera bracket 5.

For example, the second camera module 4 may be fastened to the second camera bracket 5, the second camera bracket 5 may surround the second camera module 4, and an optical axis of the second camera module 4 may be substantially parallel to the Z-axis direction. A ground end 41 of the second camera module 4 may be electrically connected to the second camera bracket 5. It may be understood that, on a premise that no conflict occurs, for a related solution of the second camera module 4, refer to the related solutions of the first camera module 1 in the first implementation to the fourth implementation. Details are not specifically described again.

As shown in FIG. 17, for example, the second camera bracket 5 may include a second body member 51 and a second conductive member 52. It may be understood that, on a premise that no conflict occurs, for a related solution of the second camera bracket 5, refer to the related solutions of the second camera bracket 5 in the first implementation to the fourth implementation. Details are not specifically described again.

For example, a material of the second body member 51 may include a magnesium alloy. A through hole 511 may be provided on the second body member 51. The through hole 511 and the second camera module 4 may be arranged in an optical axis direction of the second camera module 4 (namely, the Z-axis direction).

For example, the second conductive member 52 may be fastened to the second body member 51 and electrically connected to the second body member 51.

For example, the second camera module 4 may include the ground end 41, and the ground end 41 of the second camera module 4 may be electrically connected to the second conductive member 52. The second conductive member 52 and the ground end 41 of the second camera module 4 may be arranged in the optical axis direction of the second camera module 4 (namely, the Z-axis direction).

For example, the second conductive member 52 may be a spring plate, a plating layer, a laser engraving layer, or a coating.

In another implementation, the second conductive member 52 may alternatively use another structure. This is not specifically limited in this application.

For example, a material of the second conductive member 52 may include one or more of nickel, chromium, zinc, gold, magnesium oxide, or the like.

In another implementation, the material of the second conductive member 52 may alternatively include another material. This is not specifically limited in this application.

For example, the camera assembly 100 may further include a second silver adhesive 6. A material of the second silver adhesive 6 may be a silver adhesive. The second silver adhesive 6 may be fastened between the ground end 41 of the second camera module 4 and the second conductive member 52, and electrically connected between the ground end 41 of the second camera module 4 and the second conductive member 52. It may be understood that the second silver adhesive 6 may implement an electrical connection between the ground end 41 of the second camera module 4 and the second conductive member 52.

In another implementation, the ground end 41 of the second camera module 4 may alternatively be electrically connected to the second conductive member 52 in another manner. This is not specifically limited in this application.

As shown in FIG. 16, for example, the second camera bracket 5 may be fastened to the first camera bracket 2 and electrically connected to the first camera bracket 2. In an implementation, the first camera bracket 2 and the second camera bracket 5 may be integrally formed. In another implementation, the first camera bracket 2 and the second camera bracket 5 may be two independent mechanical parts, and the second camera bracket 5 may be fastened through adhesive bonding, welding, or the like to and electrically connected to the first camera bracket 2.

For example, the ground end 41 of the second camera module 4 may be electrically connected to the housing 200 through the second camera bracket 5 and the first camera bracket 2, to implement grounding. In an implementation, the ground end 41 of the second camera module 4 may be electrically connected to the middle frame of the housing 200 through the second camera bracket 5 and the first camera bracket 2, to implement grounding.

It should be noted that implementations of this application or features in implementations may be combined with each other in a case of no conflict, and any combination of features in different implementations also falls within the protection scope of this application. In other words, the plurality of implementations described above may alternatively be combined according to an actual requirement.

It should be noted that all the foregoing accompanying drawings are example figures of this application, and do not represent actual sizes of products. In addition, a size proportion relationship between the components in the accompanying drawings is not intended to limit an actual product in this application. The foregoing descriptions are merely some implementations and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera assembly (100), comprising a first camera module (1) and a first camera bracket (2), wherein the first camera module (1) is fastened to the first camera bracket (2);
the first camera bracket (2) comprises a first body member (21) and a first conductive member (22), the first body member (21) comprises a body layer (211) and an antioxidation layer (212), a material of the body layer (211) comprises a magnesium alloy, and impedance of the body layer (211) is less than impedance of the antioxidation layer (212); and
the body layer (211) comprises a first area (2117) and a second area (2118), the antioxidation layer (212) is fastened to the first area (2117), the first conductive member (22) is fastened to the second area (2118) and is electrically connected to the body layer (211), the first conductive member (22) is further electrically connected to a ground end (14) of the first camera module (1), and impedance of the first conductive member (22) is less than the impedance of the antioxidation layer (212).

2. The camera assembly (100) according to claim 1, wherein impedance between the first conductive member (22) and the body layer (211) is less than or equal to 1 Ω.

3. The camera assembly (100) according to claim 2, wherein the impedance of the first conductive member (22) is less than or equal to 1 Ω.

4. The camera assembly (100) according to claim 3, wherein impedance between the first conductive member (22) and the first camera module (1) is less than or equal to 5 Ω.

5. The camera assembly (100) according to any one of claims 1 to 4, wherein the body layer (211) comprises a protrusion (211a), and the protrusion (211a) of the body layer (211) protrudes from the second area (2118); and/or
the body layer (211) comprises a recess area (211b), and the recess area (211b) of the body layer (211) is located in the second area (2118).

6. The camera assembly (100) according to claim 5, wherein the first conductive member (22) is a spring plate, a plating layer, a laser engraving layer, or a coating.

7. The camera assembly (100) according to claim 6, wherein the first conductive member (22) is a spring plate; and
the first conductive member (22) is fastened to the first body member (21) through welding; and/or a positioning pillar (215) protrudes from one of the first body member (21) and the first conductive member (22), and a positioning hole (225) is provided on the other one of the first body member (21) and the first conductive member (22), wherein at least a part of the positioning pillar (215) is located in the positioning hole (225).

8. The camera assembly (100) according to claim 7, wherein the first conductive member (22) comprises a first part (224) and a second part (225), the second part (225) is bent and connected to the first part (224), the first part (224) is fastened to the first body member (21) and is electrically connected to the first body member (21), and the second part (225) is electrically connected to the ground end (14) of the first camera module (1).

9. The camera assembly (100) according to claim 8, wherein the first conductive member (22) comprises a first conductive member body (221), a first plating layer (222), and a second plating layer (223), the first plating layer (222) is fastened to the first conductive member body (221), and the second plating layer (223) is fastened to a side that is of the first plating layer (222) and that is away from the first conductive member body (221); and
reducibility of the first plating layer (222) is greater than reducibility of the second plating layer (223).

10. The camera assembly (100) according to claim 9, wherein the first conductive member (22) comprises a protrusion (226), and the protrusion (226) of the first conductive member (22) protrudes from the first conductive member body (221) on the second part (225); and/or the first conductive member (22) comprises a recess area (227), and the recess area (227) of the first conductive member (22) is located on the first conductive member body (221) on the second part (225).

11. The camera assembly (100) according to claim 6, wherein the first conductive member (22) is a plating layer; and
the first conductive member (22) comprises a first plating layer (222), the first plating layer (222) is fastened to the first body member (21), and impedance of the first plating layer (222) is less than the impedance of the antioxidation layer (212).

12. The camera assembly (100) according to claim 10, wherein the first conductive member (22) further comprises the second plating layer (223), the second plating layer (223) is fastened to a side that is of the first plating layer (222) and that is away from the first body member (21), and the reducibility of the first plating layer (222) is greater than the reducibility of the second plating layer (223).

13. The camera assembly (100) according to claim 12, wherein a material of the first plating layer (222) comprises nickel, chromium, or zinc; and/or a material of the second plating layer (223) comprises gold.

14. The camera assembly (100) according to claim 6, wherein the first conductive member (22) is a laser engraving layer, and a surface density P of the first conductive member (22) satisfies: P≥95%.

15. The camera assembly (100) according to claim 6, wherein the first conductive member (22) is a coating; and
the second area (2118) protrudes relative to the first area (2117) in a direction close to the ground end (14) of the first camera module (1), and the second area (2118) is disposed opposite to the ground end (14) of the first camera module (1).

16. The camera assembly (100) according to any one of claims 7 to 15, wherein the camera assembly (100) further comprises a first silver adhesive (3), the first silver adhesive (3) is fastened to the first conductive member (22) and the ground end (14) of the first camera module (1), and the first conductive member (22) is electrically connected to the ground end (14) of the first camera module (1) through the first silver adhesive (3).

17. The camera assembly (100) according to claim 16, wherein the body layer (211) further comprises a third area (2119), and the third area (2119) and the second area (2118) are spaced apart; and
the first camera bracket (2) further comprises an electrical connection member (23), impedance of the electrical connection member (23) is less than the impedance of the antioxidation layer (212), the electrical connection member (23) is fastened to the third area (2119), and the electrical connection member (23) is electrically connected to the body layer (211).

18. An electronic device (1000), comprising a housing (200) and the camera assembly (100) according to any one of claims 1 to 16, wherein the camera assembly (100) is fastened to the housing (200), and the first camera bracket (2) is electrically connected to the housing (200), to implement grounding of the ground end (14) of the first camera module (1).

19. The electronic device (1000) according to claim 18, wherein the body layer (211) further comprises a third area (2119), and the third area (2119) and the second area (2118) are spaced apart; and
the first camera bracket (2) further comprises an electrical connection member (23), impedance of the electrical connection member (23) is less than the impedance of the antioxidation layer (212), the electrical connection member (23) is fastened to the third area (2119), and the electrical connection member (23) is electrically connected to the body layer (211).

20. The electronic device (1000) according to claim 19, wherein the electronic device (1000) further comprises a dome (400), the dome (400) is fastened between the electrical connection member (23) and the housing (200), and the dome (400) is further electrically connected to the electrical connection member (23) and the housing (200).
